# EUROPÄISCHE PATENTSCHRIFT

(11) **EP 3 261 766 B1**
(45) Veröffentlichungstag und Bekanntmachung des Hinweises auf die Patenterteilung: **16.01.2019**
(21) Anmeldenummer: 15710414.2
(22) Anmeldetag: 27.02.2015
(51) Int. Cl.: B02C 19/18, B02C 23/12, B02C 23/22, B02C 23/36

(54) **VERFAHREN UND VORRICHTUNG ZUR FRAGMENTIERUNG UND/ODER SCHWÄCHUNG VON SCHÜTTFÄHIGEM MATERIAL MITTELS HOCHSPANNUNGSENTLADUNGEN**
METHOD AND DEVICE FOR FRAGMENTING AND/OR WEAKENING POURABLE MATERIAL BY MEANS OF HIGH-VOLTAGE DISCHARGES
PROCÉDÉ ET DISPOSITIF DE FRAGMENTATION ET/OU D'AFFAIBLISSEMENT DE MATÉRIAU EN VRAC AU MOYEN DE DÉCHARGES À HAUTE TENSION

(43) Veröffentlichungstag der Anmeldung: 03.01.2018
(73) Patentinhaber: Selfrag AG, 3210 Kerzers (CH)
(72) Erfinder: KÄPPELER, Johannes, CH-3177 Laupen (CH); MÜLLER-SIEBERT, Reinhard, CH-3013 Bern (CH)
(74) Vertreter: Münch, Martin Walter
(86) Internationale Anmeldenummer: PCT/CH2015/000030
(87) Internationale Veröffentlichungsnummer: WO 2016/134488

(56) Entgegenhaltungen:
- DE-A1- 19 545 580
- JP-A- 2003 154 286
- KR-A- 20120 139 638

## Beschreibung

### TECHNISCHES GEBIET

Die Erfindung betrifft ein Verfahren zur Fragmentierung und/oder Schwächung von schüttfähigem Material mittels Hochspannungsentladungen sowie eine Vorrichtung zur Durchführung des Verfahrens gemäss den Oberbegriffen der unabhängigen Patentansprüche.

### STAND DER TECHNIK

Aus dem Stand der Technik ist es bekannt, verschiedenste Materialien mittels gepulster Hochspannungsentladungen zu zerkleinern oder derartig zu schwächen, dass diese in einem nachgeschalteten mechanischen Zerkleinerungsprozess einfacher zerkleinert werden können.

Eine Vorrichtung und ein Verfahren zur Fragmentierung von beispielsweise Gestein ist aus der JP2003154286 bekannt.

Für die Fragmentierung und/oder Schwächung von schüttfähigem Material mittels Hochspannungsentladungen sind heute verschiedene Prozessarten bekannt.

Bei kleinen Materialmengen erfolgt die Fragmentierung und/oder Schwächung des Materials im Batchbetrieb in einem geschlossenen Prozessgefäss, in welchem Hochspannungsdurchschläge durch das Material erzeugt werden. Für grosse Materialmengen sind diese Verfahren ungeeignet.

Bei grossen Materialmengen erfolgt die Fragmentierung und/oder Schwächung des Materials in einem kontinuierlichen Prozess, indem ein Materialstrom aus dem zu zerkleinernden Material an einer oder mehreren Hochspannungselektroden vorbeigeführt wird, mittels welchen Hochspannungsdurchschläge durch das Material erzeugt werden.

Dabei wird in einer ersten Variante das Material in einen Prozessraum mit Sieböffnungen geführt, welchen es erst dann verlassen kann, wenn es auf eine durch die Sieböffnungen definierte Zielgrösse zerkleinert ist. Die Geschwindigkeit, mit der das Material durch die Prozesszone geführt wird und damit die Intensität, mit welcher das Material mit Hochspanungsdurchschlägen beaufschlagt wird, hängt bei dieser Variante davon ab, wie schnell sich das Material vollständig auf Zielkorngrösse bzw. Korngrössen kleiner der Zielkorngrösse zerkleinern lässt. Hieraus ergibt sich der Nachteil, dass der Prozess nur in engen Bereichen beeinflussbar ist, was zu Problemen wie eine Überzerkleinerung des Materials, ein unerwünscht grosser Feinanteil und/oder eine schlechte Energieeffizienz des Prozesses führen kann.

In einer zweiten Variante wird das Material mittels eines Förderbands unter einer oder mehreren Hochspannungselektroden hindurchgeführt, wobei Hochspannungsdurchschläge durch das Material erzeugt werden. Diese Variante vermeidet die zuvor erwähnten Nachteile der ersten Variante, weist jedoch ihrerseits den Nachteil auf, dass etwaiges aus diesem Prozess hervorgehendes, nicht ausreichend prozessiertes Material separiert und erneut dem Prozess zugeführt werden muss, wozu teure und platzbeanspruchende Zusatzeinrichtungen erforderlich sind.

### DARSTELLUNG DER ERFINDUNG

Es stellt sich deshalb die Aufgabe, kontinuierliche Verfahren zur Fragmentierung und/oder Schwächung von schüttfähigem Material mittels Hochspannungsentladungen sowie Vorrichtungen zur Durchführung solcher Verfahren zur Verfügung zu stellen, welche die zuvor erwähnten Nachteile des Standes der Technik nicht aufweisen oder zumindest teilweise vermeiden.

Diese Aufgabe wird durch die Gegenstände der unabhängigen Patentansprüche gelöst.

Gemäss diesen betrifft ein erster Aspekt der Erfindung ein Verfahren zur Fragmentierung und/oder Schwächung von schüttfähigem Material, insbesondere von Gesteinsbruchstücken oder -schotter, mittels Hochspannungsentladungen.

Gemäss diesem Verfahren wird ein ring- oder bogenförmiger Materialstrom, welcher bevorzugterweise kreisringförmig bzw. kreisringsegmentförmig ist, aus dem zu fragmentierenden und/oder zu schwächenden schüttfähigen Material gebildet und, eingetaucht in einer Prozessflüssigkeit, an einer Hochspannungselektroden-Anordnung vorbeigeführt, mittels welcher während dem Vorbeiführen des Materialstromes Hochspannungsdurchschläge durch den Materialstrom erzeugt werden. Hierfür wird die Hochspannungselektroden-Anordnung mit einem oder mehreren Hochspannungsgeneratoren mit Hochspannungspulsen beaufschlagt. Materialströme, welche in einer geschlossenen Transportschleife zirkulieren, werden unabhängig davon, welche Form diese Schleife hat, als "ringförmige Materialströme" im Sinne dieser Beschreibung und der Patentansprüche verstanden.

Dabei wird stromaufwärts von der Hochspannungselektroden-Anordnung Material zu dem Materialstrom zugeführt und stromabwärts von der Hochspannungselektroden-Anordnung Material vom Materialstrom weggeführt.

Durch das erfindungsgemässe Verfahren wird ein kontinuierlicher Prozess zum Fragmentieren und/oder Schwächen von schüttfähigem Material möglich, bei dem sich die Geschwindigkeit, mit der das Material durch die Prozesszone geführt wird, und die Intensität, mit welcher das Material mit Hochspannungsdurchschlägen beaufschlagt wird, in weiten Bereichen einstellen lässt und bei welchem etwaiges aus der Prozesszone austretendes nicht ausreichend prozessiertes Material auf kürzestem Wege und praktisch ohne zusätzlichen Platzbedarf, z.B. durch Verbleib im Materialstrom oder als ein durch einen von dem ring- oder bogenförmigen Materialstrom umgebenen Bereich führender Bypass-Materialstrom, erneut der Prozesszone zugeführt werden kann.

Bevorzugterweise wird dabei kein Material im Bereich der Prozesszone von dem Materialstrom weggeführt, also in dem Bereich, in welchem mittels der Hochspannungselektroden-Anordnung Hochspannungsdurchschläge durch den Materialstrom erzeugt werden. Hierdurch ist es möglich, einen einfachen und robusten Aufbau der Prozesszone zu realisieren.

In einer bevorzugten Ausführungsform des Verfahrens wird stromabwärts von der Hochspannungselektroden-Anordnung ein Teilstrom des Materialstromes oder der gesamte Materialstrom in einen zentralen Bereich geführt, welcher von dem ring- oder bogenförmigen Materialstrom umgeben ist. Durch die Nutzung des von dem ring- oder bogenförmigen Materialstrom umgebenen Bereichs für weitere prozesstechnische Schritte, wie z.B. das Abführen von Material und/oder das Separieren von ausreichend zerkleinertem Material von nicht ausreichend zerkleinertem Material, ergibt sich der Vorteil, dass für diese Prozessschritte kein zusätzlicher Raum zur Verfügung gestellt werden muss.

Entsprechend ist es dabei in einer Variante bevorzugt, dass zumindest ein Teil des in den zentralen Bereich geführten Materials aus diesem Bereich weggeführt wird.

In einer weiteren Variante ist es bevorzugt, dass zumindest ein Teil des in den zentralen Bereich geführten Materials aus diesem Bereich zurück in den ring- oder bogenförmigen Materialstrom geführt wird, also einen Bypass-Materialstrom zu diesem bildet, und anschliessend mit diesem Materialstrom erneut an der Hochspannungselektroden-Anordnung vorbeigeführt wird.

In einer bevorzugten Kombination der beiden zuvor erwähnten Varianten wird das in den zentralen Bereich geführte Material mittels einer im zentralen Bereich angeordneten Separationsvorrichtung, beispielsweise mittels eines Siebes, in fertig prozessiertes Material und nicht-fertig prozessiertes Material, also beispielsweise in ausreichend zerkleinertes Material und nicht-ausreichend zerkleinertes Material, aufgeteilt. Das fertig prozessierte Material wird dabei aus dem zentralen Bereich weggeführt, während das nicht-fertig prozessierte Material in den ring- oder bogenförmigen Materialstrom zurückgeführt wird. Auf diese Weise werden sehr kompakte Anlagen zur Durchführung des erfindungsgemässen Verfahrens möglich, bei denen lediglich für das Zuführen des zu prozessierenden Materials und für das Abführen des fertig prozessierten Materials zusätzlicher Raum zur Verfügung gestellt werden muss.

In einer weiteren bevorzugten Ausführungsform des Verfahrens wird der ring- oder bogenförmige Materialstrom dadurch gebildet, dass das Material auf eine karussellartige Vorrichtung aufgegeben wird, z.B. in eine ringförmige Rinne, und durch Rotation dieser Vorrichtung um eine durch den zentralen Bereich verlaufende, im Wesentlichen vertikale Achse herum an der Hochspannungselektroden-Anordnung vorbeigeführt wird. Hierdurch lässt sich auf einfache Weise ein ring- oder bogenförmiger Materialstrom bilden.

In noch einer weiteren bevorzugten Ausführungsform des Verfahrens wird eine Hochspannungselektroden-Anordnung verwendet, welche eine matrixartige Anordnung aus mehreren Hochspannungselektroden umfasst, die jeweils mit Hochspannungspulsen beaufschlagt werden. Hierdurch lässt sich eine intensive und flächige Beaufschlagung des vorbeigeführten Materialstromes mit Hochspannungsdurchschlägen erzielen.

Erstreckt sich dabei die matrixartige Elektrodenanordnung über einen Bereich grösser als 180° des ring- oder bogenförmigen Materialstroms, was bevorzugt ist, so kann auch bei relativ grosser Geschwindigkeit des Materialstroms eine intensive Beaufschlagung desselben mit Hochspannungsdurchschlägen erreicht werden und eine entsprechend grosse Mengen an Material pro Zeiteinheit prozessiert werden.

Dabei weist bevorzugterweise jede der Hochspannungselektroden der Matrix ihren eigenen Hochspannungsgenerator auf, mit welchem sie unabhängig von den anderen Hochspannungselektroden mit Hochspannungspulsen beaufschlagt wird. Hierdurch wird es möglich, über die gesamte Fläche der Matrix eine gleichmässige und hohe Energieeinbringung in den Materialstrom sicherzustellen oder auch gezielt einzelne Bereiche mit unterschiedlichen Energiemengen zu beaufschlagen.

Als Gegenelektrode für die Hochspannungselektroden der Hochspannungselektroden-Anordnung wird gemäss einer bevorzugten Ausführungsform des Verfahrens ein die Unterseite des Materialstromes im Bereich der Hochspannungselektroden-Anordnung begrenzendes Element verwendet, so dass durch das Beaufschlagen der Hochspannungselektroden mit Hochspannungspulsen Hochspannungsdurchschläge zwischen der jeweiligen Hochspannungselektrode und diesem Element durch den Materialstrom hindurch stattfinden. Bevorzugterweise ist dieses Element der Boden einer karussellartigen Vorrichtung ist, mit welcher der Materialstrom an der Hochspannungselektroden-Anordnung vorbeigeführt wird. Bevorzugterweise sind dabei die Hochspannungselektroden der Hochspanungselektroden-Anordnung in den Materialstrom eingetaucht. Mit dieser Verfahrensvariante kann besonders intensiv auf das Material des Materialstromes eingewirkt werden, da die Hochspannungsdurchschläge über die gesamte Dicke des Materialstromes erfolgen.

In einer anderen bevorzugten Ausführungsform des Verfahrens weist jede der Hochspannungselektroden der Hochspannungselektroden-Anordnung eine oder mehrere eigene, d.h. der jeweiligen Hochspannungselektrode exklusiv zugeordnete, Gegenelektroden auf, welche derartig seitlich neben dieser und/oder unter dieser Hochspannungselektrode angeordnet ist bzw. sind, dass durch das Beaufschlagen der jeweiligen Hochspannungselektrode mit Hochspannungspulsen Hochspannungsdurchschläge zwischen der Hochspannungselektrode und der bzw. den Gegenelektroden durch den an diesen vorbeigeführten Materialstrom erzeugt werden. Bevorzugterweise sind dabei die Hochspannungselektroden und/oder die Gegenelektroden in den Materialstrom eingetaucht.

Hierdurch ergibt sich der Vorteil, dass die Durchschlagsspannung im Wesentlichen entkoppelt ist von der Dicke des Materialstromes, so dass auch Materialströme aus grossen Materialstücken ohne Weiteres prozessiert werden können. Ein weiterer Vorteil dieser Ausführungsform besteht darin, dass sie grösstmögliche Gestaltungsfreiheit bezüglich der Auflagefläche bzw. der Fördereinrichtung für den Materialstrom im Bereich der Prozesszone bietet, weil die Bodenfläche der Prozesszone nicht als Gegenelektrode benötigt wird.

Dabei ist es bei der letztgenannten bevorzugten Ausführungsform weiter bevorzugt, dass die Gegenelektroden von der jeweiligen Hochspannungselektrode bzw. von deren Tragstruktur getragen werden.

In noch einer weiteren bevorzugten Ausführungsform des Verfahrens wird das Material des äusseren und/oder des inneren Randbereichs des ring- oder bogenförmigen Materialstromes nicht weggeführt, sondern läuft als durchgehender ring- oder bogenförmiger Materialstrom fortwährend um.

In einer anderen bevorzugten Ausführungsform des Verfahrens wird an einer ersten Position stromabwärts von der Hochspannungselektroden-Anordnung Material aus dem mittleren Bereich des Materialstromes weggeführt. An einer zweiten Position stromabwärts von der ersten Position wird das Material des äusseren und/oder des inneren Randbereichs zumindest zum Teil in die Mitte des Materialstromes geführt, mit Vorteil in den Bereich, aus welchem zuvor an der ersten Position Material weggeführt wurde. An einer dritten Position stromabwärts von der zweiten Position wird neues Material in den äusseren und/oder den inneren Randbereich des Materialstroms zugeführt, bevor der Materialstrom erneut an der Hochspannungselektroden-Anordnung vorbeigeführt und mit Hochspannungsdurchschlägen beaufschlagt wird.

In noch einer anderen bevorzugten Ausführungsform des Verfahrens wird der innere und/oder der äussere Randbereich des Materialstromes im Bereich entlang der Prozesszone, d.h. entlang des Bereichs, in welchem Hochspannungsdurchschläge durch das Material des Materialstromes erzeugt werden, von im Wesentlichen unbewegten Bereichen aus dem gleichen Material begrenzt.

Diese drei zuvor genannten bevorzugten Ausführungsformen sind auch kombinierbar, z.B. derart, dass der äussere Randbereich als durchgehender ring- oder bogenförmiger Materialstrom fortwährend umläuft oder stromabwärts von der Hochspanungselektrodenanordnung in den mittleren Bereich des Materialstroms geführt wird, während der innere Randbereich zumindest im Bereich entlang der Prozesszone von im Wesentlichen unbewegten Bereichen aus dem gleichen Material begrenzt wird. Dabei ist es weiter bevorzugt, dass das aus dem Materialstrom weggeführte Material, wie zuvor dargelegt, in einen zentralen Bereich geführt wird, welcher von dem ring- oder bogenförmigen Materialstrom umgeben ist.

Wird bei diesen letztgenannten bevorzugten Ausführungsformen des erfindungsgemässen Verfahrens die Breite der Prozesszone, d.h. die Breite der Zone, in welcher Hochspannungsdurchschläge durch den Materialstrom erzeugt werden, in Bewegungsrichtung des Materialstromes gesehen so gewählt, dass diese äusseren und/oder inneren Randbereiche die Prozesszone seitlich begrenzen und dabei im Wesentlichen nicht mit Hochspannungsdurchschlägen beaufschlagt werden, was bevorzugt ist, so ergibt sich der Vorteil, dass auf verschleissanfällige anlagenseitige Einrichtungen zur seitlichen Begrenzung der eigentlichen Prozesszone verzichtet werden kann und eine Kontamination mit Fremdmaterial verhindert wird.

Bei der letztgenannten bevorzugten Ausführungsform des Verfahrens, bei welcher der innere und/oder der äussere Randbereich des Materialstromes im Bereich entlang der Prozesszone von im Wesentlichen unbewegten Bereichen aus dem gleichen Material begrenzt wird, ist es weiter bevorzugt, dass diese im Wesentlichen unbewegten Bereiche dadurch gebildet werden, dass die Randbereiche des Materialstromes an einer Stelle stromabwärts der Hochspannungselektroden-Anordnung aufgestaut werden, so dass sich unbewegte Materialzonen seitlich entlang der gesamte Länge der Prozesszone erstrecken.

In noch einer weiteren bevorzugten Ausführungsform des Verfahrens weist die Hochspannungselektroden-Anordnung eine oder mehrere unabhängig voneinander entlang von bevorzugterweise parallelen, bevorzugterweise vertikal orientierten Verschiebeachsen verschiebbare Hochspannungselektroden auf. Diese Hochspannungselektroden werden während dem Vorbeiführen des Materialstroms an der Hochspannungselektroden-Anordnung und dem Erzeugen von Hochspannungsdurchschlägen durch den Materialstrom derartig entlang ihrer Verschiebeachsen verschoben, dass sie jeweils der Kontur des Materialstroms mit einem bestimmten Abstand folgen oder in Kontakt mit der Oberfläche des Materialstroms dessen Kontur folgen und dabei in die Prozessflüssigkeit eingetaucht sind. Hierdurch können auch Materialströme mit sehr ungleichmässiger Dicke, z.B. aus sehr groben Materialstücken bzw. aus sehr unterschiedlich grossen Materialstücken gebildete Materialströme, prozessiert werden.

Weiter ist es bevorzugt, dass jede Hochspannungselektrode der Hochspannungselektroden-Anordnung ihren eigenen Hochspannungsgenerator aufweist, mit welchem diese unabhängig von den anderen Hochspannungselektroden mit Hochspannungspulsen beaufschlagt wird. Hierdurch wird es, insbesondere bei als Matrix aus Hochspannungselektroden aufgebauten Hochspannungselektroden-Anordnungen, möglich, über sämtliche Hochspannungselektroden eine gleichmässige und hohe Energieeinbringung in den Materialstrom sicherzustellen oder auch gezielt einzelne Hochspannungselektroden mit unterschiedlichen Energiemengen zu beaufschlagen.

Dabei ist es weiter bevorzugt, dass der Hochspannungsgenerator jeweils fest mit der Hochspannungselektrode verbunden ist. Auf diese Weise wird eine sichere Verbindung zwischen dem jeweiligen Hochspannungsgenerator und der jeweiligen Hochspannungselektrode gewährleistet und der jeweilige Hochspannungsgenerator und die jeweilige Hochspannungselektrode können als Einheit ausgetauscht und gewartet werden.

Ein zweiter Aspekt der Erfindung betrifft eine Vorrichtung zur Durchführung des Verfahrens gemäss dem ersten Aspekt der Erfindung. Diese Vorrichtung weist eine Hochspannungselektroden-Anordnung auf, welche mittels einem oder mehreren Hochspannungsgeneratoren mit Hochspannungspulsen beaufschlagbar ist, sowie eine karussellartige Einrichtung, mittels welcher, bevorzugterweise unter Rotation derselben um eine zentrale und im Wesentlichen vertikale Achse herum, schüttfähiges Material als ring- oder bogenförmiger Materialstrom, welcher bevorzugterweise kreisringförmig bzw. kreisringsegmentförmig ist, eingetaucht in ein Prozessfluid unter der Hochspannungselektroden-Anordnung hindurchgeführt werden kann, so dass bei einem Beaufschlagen der Hochspannungselektroden-Anordnung mit Hochspannungspulsen Hochspannungsdurchschläge durch das Material des Materialstroms während dem Vorbeiführen desselben an der Hochspannungselektroden-Anordnung erzeugbar sind. Weiter weist die Vorrichtung Mittel zum Zuführen von Material zu dem im bestimmungsgemässen Betrieb mittels der karussellartigen Einrichtung erzeugten ring- oder bogenförmigen Materialstrom stromaufwärts von der Hochspannungselektroden-Anordnung auf, sowie Mittel zum Wegführen von Material von diesem Materialstrom stromabwärts von der Hochspannungselektroden-Anordnung.

Mit der erfindungsgemässen Vorrichtung kann mit geringem Raumbedarf ein kontinuierlicher Prozess zum Fragmentieren und/oder Schwächen von schüttfähigem Material realsiert werden, bei dem sich die Geschwindigkeit, mit der das Material durch die Prozesszone geführt wird, und die Intensität, mit welcher es mit Hochspannungsdurchschlägen beaufschlagt wird, auf einfache Weise in weiten Bereichen einstellen lässt. Auch wird es mit einer solchen Vorrichtung möglich, etwaiges aus der Prozesszone austretendes nicht ausreichend prozessiertes Material auf kürzestem Wege und praktisch ohne zusätzlichen Platzbedarf, z.B. durch Verbleib im Materialstrom oder als ein durch einen von dem ring- oder bogenförmigen Materialstrom umgebenen Bereich führender Bypass-Materialstrom, erneut der Prozesszone zuzuführen.

In einer bevorzugten Ausführungsform der Vorrichtung weist deren karussellartige Einrichtung in dem Bereich, in welchem sie im bestimmungsgemässen Betrieb das den ring- oder bogenförmigen Materialstrom bildende Material trägt, Sieböffnungen auf als anspruchsgemässe Mittel zum Wegführen von Material, über welche Material, das kleiner ist als die Sieböffnungen, vom Materialstrom weggeführt werden kann. Dabei ist es als Subvariante bevorzugt, dass die karussellartige Einrichtung eine ring- oder bogenförmige Rinne mit umlaufenden Siebboden aufweist, in welcher im bestimmungsgemässen Betrieb das zu fragmentierende und/oder zu schwächende Material aufgenommen ist und welche dabei zur Erzeugung des ring- oder bogenförmigen Materialstromes um das Zentrum ihrer Kreisringform rotiert wird. Dabei ist es auch vorgesehen, dass ebenfalls in der Prozesszone, während dem Beaufschlagen des Materials mit Hochspannungsdurchschlägen, Material welches kleiner ist als die Sieböffnungen, die Rinne durch die Sieböffnungen verlassen kann und damit vom Materialstrom weggeführt wird. Derartige Vorrichtungen sind relativ einfach und kostengünstig herzustellen und einfach zu unterhalten, weisen jedoch den Nachteil auf, dass sich die Sieböffnungen mit zunehmender Betriebszeit vergrössern und der Siebboden deshalb ein Verschleissteil ist.

In einer anderen bevorzugten Ausführungsform der Vorrichtung bildet die karussellartige Einrichtung in dem Bereich, in welchem sie im bestimmungsgemässen Betrieb das den ring- oder bogenförmigen Materialstrom bildende Material trägt, einen geschlossenen Boden. Dabei sind die Mittel zum Wegführen von Material derartig ausgebildet, z.B. in Form einer oder mehrerer Leiteinrichtungen, dass mit ihnen ein Teilstrom des Materialstromes, insbesondere aus der Mitte des Materialstromes, oder der gesamte Materialstrom in einen zentralen Bereich im Zentrum der karussellartigen Einrichtung geführt werden kann, welcher von dem ring- oder bogenförmigen Materialstrom umgeben ist. Hierdurch ergibt sich der Vorteil, dass in dem von dem ring- oder bogenförmigen Materialstrom umgebenen Bereich allfällige weitere Einrichtungen für den Transport und/oder die weitere Behandlung des aus dem Materialstrom weggeführten Materials angeordnet werden können, wie beispielsweise Transporteinrichtungen für das Wegführen von fertig prozessiertem Material von der Vorrichtung (z.B. Förderbänder oder Materialrutschen) und/oder Einrichtungen für das Separieren von ausreichend zerkleinertem Material von nicht-ausreichend zerkleinertem Material (z.B. Siebeinrichtungen), so dass für diese Einrichtungen kein zusätzlicher Raum zur Verfügung gestellt werden muss.

Entsprechend ist es bei dieser bevorzugten Ausführungsform der Vorrichtung von Vorteil, wenn die Vorrichtung im zentralen Bereich derartige Einrichtungen aufweist.

In einer weiteren Variante dieser Ausführungsform ist es bevorzugt, das die Vorrichtung über Mittel zum Zurückführen zumindest eines Teils des in den zentralen Bereich geführten Materials in den ring- oder bogenförmigen Materialstrom verfügt, z.B. eine oder mehrere Leiteinrichtungen zu diesem Zweck aufweist. Auf diese Weise kann Material, welches in den zentralen Bereich geführt wurde, wieder in den ring- oder bogenförmigen Materialstrom eingeschleust und erneut prozessiert werden.

Besonders bevorzugt ist es dabei, dass die Vorrichtung in dem zentralen Bereich eine Separationsvorrichtung aufweist, z.B. ein Sieb, mittels welcher das in diesen Bereich geführte Material in fertig prozessiertes Material und nicht-fertig prozessiertes Material aufgeteilt wird und dass anschliessend das fertig prozessierte Material mit Transporteinrichtungen aus dem zentralen Bereich herausgeführt und von der Vorrichtung weggeführt wird, während das nicht-fertig prozessierte Material mit den Mitteln zum Zurückführen des Materials wieder in den ring- oder bogenförmigen Materialstrom eingespeist wird, zur erneuten Beaufschlagung mit Hochspannungsdurchschlägen.

Auf diese Weise werden sehr kompakte erfindungsgemässe Vorrichtungen möglich, bei denen lediglich für das Zuführen des zu prozessierenden Materials und für das Abführen des fertig prozessierten Materials Raum ausserhalb des zentralen Bereichs zur Verfügung gestellt werden muss.

In einer weiteren bevorzugten Ausführungsform weist die Vorrichtung Mittel auf, mit denen im bestimmungsgemässen Betrieb bewirkt werden kann, dass der innere Randbereich und/oder der äussere Randbereich des ring- oder bogenförmigen Materialstromes im Bereich der Prozesszone, also in dem Bereich, in welchem Hochspannungsdurchschläge durch das Material des Materialstromes erzeugt werden, im Wesentlichen von unbewegten Bereichen aus dem gleichen Material begrenzt wird bzw. werden. Mit anderen Worten gesagt bewirken diese Mittel also, dass die Zone des Materialstromes, in welcher Hochspannungsdurchschläge durch das Material des Materialstromes erzeugt werden, in Bewegungsrichtung des Materialstromes gesehen auf der Innenseite und/oder auf der Aussenseite von unbewegten Bereichen bzw. Zonen aus dem gleichen Material begrenzt wird bzw. werden. Auf diese Weise werden die seitlichen Begrenzungen der Zone des bewegten Materialstromes, in der die Hochspannungsdurchschläge stattfinden (Prozesszone), durch identisches aber im Wesentlichen unbewegtes Material gebildet.

Dabei ist die Vorrichtung bevorzugterweise derartig ausgebildet, dass sich im bestimmungsgemässen Betrieb beim Vorbeiführen des Materialstromes an der Hochspannungselektroden-Anordnung in den Seitenbereichen der Zone, in welcher die Hochspannungsdurchschläge durch das Material des Materialstromes erzeugt werden, das Material des Materialstromes jeweils zu einer im Wesentlichen unbewegten Materialzone aufstaut, welche im Wesentlichen unberührt ist von den Hochspannungsdurchschlägen. Mit Vorteil weist die Vorrichtung hierfür Einrichtungen zum gezielten Aufstauen des Materialstroms auf, z.B. Staubleche oder seitliche Begrenzungswandungen für den Materialstrom mit Vertiefungen, in denen sich das Material staut.

Dadurch, dass die seitlichen Begrenzungen der Zone des bewegten Materialstromes, in der die Hochspannungsdurchschläge stattfinden (Prozesszone), durch identisches aber im Wesentlichen unbewegtes Material gebildet sind, kann auf verschleissintensive Einrichtungen zur seitlichen Begrenzung der eigentlichen Prozesszone verzichtet werden, was sich positiv auf die Betriebskosten und auf die wartungsbedingten Stillstandszeiten der Vorrichtung auswirkt und zudem eine Prozessführung mit geringer Fremdmaterialkontamination ermöglicht.

In noch einer weiteren bevorzugten Ausführungsform ist die Vorrichtung derartig ausgebildet, dass im bestimmungsgemässen Betrieb stromabwärts von der Hochspannungselektroden-Anordnung Material aus dem mittleren Bereich des Materialstromes weggeführt wird, während das Material des inneren Randbereichs und/oder des äusseren Randbereichs des ring- oder bogenförmigen Materialstromes in diesem verbleibt und als durchgehender ring- oder bogenförmiger Materialteilstrom fortwährend umläuft.

In noch einer weiteren bevorzugten Ausführungsform ist die Vorrichtung derartig ausgebildet, dass im bestimmungsgemässen Betrieb an einer ersten Position stromabwärts von der Hochspannungselektroden-Anordnung Material aus dem mittleren Bereich des Materialstromes weggeführt wird, an einer zweiten Position stromabwärts von der ersten Position das Material des äusseren und/- oder des inneren Randbereichs zumindest zum Teil in die Mitte des Materialstromes geführt wird, und an einer dritten Position stromabwärts von der zweiten Position neues Material in den äusseren und/oder den inneren Randbereich des Materialstroms zugeführt wird, bevor der Gesamtstrom erneut an der Hochspannungselektroden-Anordnung vorbeigeführt und mit Hochspannungsdurchschlägen beaufschlagt wird.

Auch die zwei zuletzt genannten bevorzugten Ausführungsformen der erfindungsgemässen Vorrichtung weisen den Vorteil auf, dass die seitlichen Begrenzungen der Zone des Materialstromes, in der die Hochspannungsdurchschläge stattfinden (Prozesszone), durch identisches Material gebildet sind, so dass auch bei diesen Vorrichtungen auf verschleissintensive Einrichtungen zur seitlichen Begrenzung der eigentlichen Prozesszone verzichtet werden kann, mit den zuvor bereits erwähnten vorteilhaften Auswirkungen auf die Betriebskosten, die wartungsbedingten Stillstandszeiten der Vorrichtung und die Fremdmaterialkontamination.

Die drei zuletzt genannten bevorzugten Ausführungsformen sind auch kombinierbar, z.B. derart, dass die Vorrichtung derartig ausgebildet wird, dass der äussere Randbereich als durchgehender ring- oder bogenförmiger Materialstrom fortwährend umläuft oder stromabwärts von der Hochspanungselektrodenanordnung in den mittleren Bereich des Materialstroms geführt wird, während der innere Randbereich zumindest im Bereich entlang der Prozesszone, von im Wesentlichen unbewegten Bereichen aus dem gleichen Material begrenzt wird.

Bevorzugterweise ist der Bereich der karussellartigen Einrichtung, in welchem diese im bestimmungsgemässen Betrieb das den ring- oder bogenförmigen Materialstrom bildende Material trägt, an seinem Aussenumfang von einer umfangsmässig geschlossenen Begrenzungswand begrenzt und die Vorrichtung derartig ausgebildet, dass diese Begrenzungswand beim bestimmungsgemässen Betrieb der Vorrichtung zusammen mit dem Material des Materialstromes mitbewegt wird, d.h. beim Erzeugen des ring- oder bogenförmiger Materialstroms durch Rotation der karussellartigen Einrichtung mitrotiert wird. Bei derartigen Vorrichtungen ist es besonders einfach zu realisieren, dass der äussere Randbereich als durchgehender ring- oder bogenförmiger Materialstrom fortwährend umläuft oder stromabwärts von der Hochspannungselektrodenanordnung in den mittleren Bereich des Materialstroms geführt wird.

Auch ist es bevorzugt, dass der Bereich der karussellartigen Einrichtung, in welchem diese im bestimmungsgemässen Betrieb das den ring- oder bogenförmigen Materialstrom bildende Material trägt, an seinem Innenumfang von einer feststehenden Begrenzungswand begrenzt ist, welche stromabwärts von der Hochspannungselektroden-Anordnung unterbrochen ist. Hierdurch wird es auf einfache Weise möglich, Material aus dem Materialstrom in einen zentralen Bereich der Vorrichtung, welcher von dem ring- oder bogenförmigen Materialstrom umgeben ist, zu führen. Entsprechend sind dabei die Mittel zum Wegführen von Material von dem Materialstrom derartig ausgebildet, z.B. in Form eines radial in den Materialstrom eintretenden Umleitblechs, dass im bestimmungsgemässen Betrieb Material vom ring- oder bogenförmigen Materialstrom durch diese Unterbrechung hindurch geführt wird, in den zentralen Bereich im Zentrum der karussellartigen Einrichtung.

Bei derartigen Vorrichtungen bietet es sich an, durch ein Aufstauen des Materialstroms im Bereich von dessen innerem Randbereich stromaufwärts von der Durchbrechung, als innere Begrenzung der Prozesszone eine Zone aus unbewegtem Materialstrom-Material zu schaffen, mit den bereits zuvor dargelegten Vorteilen.

Dabei sind die Mittel zum Wegführen von Material von dem Materialstrom gemäss einer ersten bevorzugten Variante derartig ausgebildet oder einstellbar, dass der gesamte ring- oder bogenförmige Materialstrom im bestimmungsgemässen Betrieb in den zentralen Bereich geführt wird, und gemäss eine zweiten bevorzugten Variante derartig ausgebildet, dass das Material des äusseren Randbereichs des ring- oder bogenförmigen Materialstromes im bestimmungsgemässen Betrieb nicht in den zentralen Bereich geführt wird, sondern als durchgehender ring- oder bogenförmiger Materialstrom umläuft. Die erstgenannte Variante bietet sich insbesondere dann an, wenn sich die Prozesszone über die gesamte Breite des Materialstromes erstreckt und/oder wenn im zentralen Bereich eine Separationseinrichtung, z.B. ein Sieb, angeordnet ist, mittels welcher das fertig prozessierte Material vom nicht-fertig prozessierten Material getrennt wird.

Die Hochspannungselektroden-Anordnung der Vorrichtung umfasst bevorzugterweise eine matrixartige Anordnung aus mehreren Hochspannungselektroden, welche jeweils mit Hochspannungspulsen beaufschlagbar sind. Mit derartigen Hochspannungselektrodenanordnungen kann eine intensive und flächige Beaufschlagung des vorbeigeführten Materialstromes mit Hochspannungsdurchschlägen erzielt werden.

Erstreckt sich dabei diese matrixartige Elektrodenanordnung über einen Bereich grösser als 180° des ring- oder bogenförmigen Materialstroms, was bevorzugt ist, so kann auch bei relativ grosser Geschwindigkeit des Materialstroms eine intensive Beaufschlagung desselben mit Hochspannungsdurchschlägen erreicht werden und eine entsprechend grosse Mengen an Material pro Zeiteinheit prozessiert werden.

Auch ist es dabei von Vorteil, wenn jede der Hochspannungselektroden der Matrix ihren eigenen Hochspannungsgenerator aufweist, mit welchem sie unabhängig von den anderen Hochspannungselektroden mit Hochspannungspulsen beaufschlagt werden kann. Hierdurch wird es möglich, über die gesamte Fläche der Matrix eine gleichmässige und hohe Energieeinbringung in den Materialstrom sicherzustellen oder auch gezielt einzelne Zonen mit unterschiedlichen Energiemengen zu beaufschlagen.

In noch einer weiteren bevorzugten Ausführungsform der Vorrichtung weist die Hochspannungselektroden-Anordnung eine oder mehrere unabhängig voneinander entlang von bevorzugterweise parallelen, mit Vorteil vertikal orientierten Verschiebeachsen verschiebbare Hochspannungselektroden auf.

Diese Hochspannungselektroden können bevorzugterweise mittels einer Maschinensteuerung während dem Vorbeiführen des Materialstroms an der Hochspannungselektroden-Anordnung und dem Erzeugen von Hochspannungsdurchschlägen durch den Materialstrom automatisch derartig entlang ihrer Verschiebeachsen verschoben werden, dass sie jeweils der Kontur des Materialstroms mit einem bestimmten Abstand folgen oder in Kontakt mit der Oberfläche des Materialstroms dessen Kontur folgen und dabei in die Prozessflüssigkeit eingetaucht sind. Hierdurch können auch Materialströme mit sehr ungleichmässiger Dicke, wie z.B. Materialströme aus sehr groben Materialstücken bzw. aus sehr unterschiedlich grossen Materialstücken, prozessiert werden.

Weist jede der Hochspannungselektroden ihren eigenen Hochspannungsgenerator auf, so ist es weiter bevorzugt, dass der Hochspannungsgenerator jeweils fest mit der Hochspannungselektrode verbunden ist und mit dieser entlang der Verschiebeachse verschiebbar ist. Auf diese Weise wird eine sichere Verbindung zwischen dem jeweiligen Hochspannungsgenerator und der jeweiligen Hochspannungselektrode gewährleistet und der jeweilige Hochspannungsgenerator und die jeweilige Hochspannungselektrode können als Einheit ausgetauscht und gewartet werden.

Als Gegenelektrode für die Hochspannungselektroden der Hochspannungselektroden-Anordnung dient gemäss einer ersten bevorzugten Variante der Vorrichtung ein die Unterseite des Materialstromes im Bereich der Hochspannungselektroden-Anordnung begrenzendes Element der karussellartigen Einrichtung, auf welchem das den ring- oder bogenförmigen Materialstrom bildende Material aufliegt. Bevorzugterweise ist dieses Element der Boden einer ring- oder bogenförmigen Rinne (mit oder ohne Sieböffnungen), in welcher das Material angeordnet ist und durch Rotation derselben um ihr Kreisringzentrum herum als kreisförmiger Materialstrom an der Hochspannungselektroden-Anordnung vorbeigeführt wird. Mit dieser Vorrichtungsvariante kann besonders intensiv auf das Material des Materialstromes eingewirkt werden, da die Hochspannungsdurchschläge über die gesamte Dicke des Materialstromes erfolgen können.

In einer anderen bevorzugten Ausführungsform weist jede der Hochspannungselektroden der Hochspannungselektroden-Anordnung eine oder mehrere eigene, d.h. der jeweiligen Hochspannungselektrode exklusiv zugeordnete, Gegenelektroden auf, welche derartig seitlich neben und/- oder unter dieser Hochspannungselektrode angeordnet ist bzw. sind, dass durch das Beaufschlagen der jeweiligen Hochspannungselektrode mit Hochspannungspulsen Hochspannungsdurchschläge zwischen der Hochspannungselektrode und der bzw. den Gegenelektroden durch den an diesen vorbeigeführten Materialstrom erzeugt werden können, insbesondere in dem bevorzugten Fall, dass die Hochspannungselektroden und/oder die Gegenelektroden in den Materialstrom eingetaucht sind.

Hierdurch ergibt sich der Vorteil, dass die Durchschlagsspannung im Wesentlichen entkoppelt ist von der Dicke des Materialstromes, so dass auch Materialströme aus grossen Materialstücken ohne Weiteres prozessiert werden können. Ein weiterer Vorteil dieser Ausführungsform besteht darin, dass sie grösstmögliche Gestaltungsfreiheit bezüglich der Auflagefläche bzw. der Fördereinrichtung für den Materialstrom im Bereich der Prozesszone bietet, weil die Bodenfläche der Prozesszone nicht als Gegenelektrode benötigt wird.

Dabei ist es bei der letztgenannten bevorzugten Ausführungsform weiter bevorzugt, dass die Gegenelektroden von der jeweiligen Hochspannungselektrode bzw. von deren Tragstruktur getragen sind.

### KURZE BESCHREIBUNG DER ZEICHNUNGEN

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Draufsicht auf eine erste erfindungsgemässe Vorrichtung in einer ersten Betriebsart;
Fig. 2 einen Vertikalschnitt durch die erste Vorrichtung entlang der Linie A-A in Fig. 1;
Fig. 3 einen Vertikalschnitt durch die erste Vorrichtung entlang der Linie B-B in Fig. 1;
Fig. 4 eine Draufsicht auf die erste Vorrichtung in einer zweiten Betriebsart;
Fig. 5 eine Draufsicht auf eine zweite erfindungsgemässe Vorrichtung;
Fig. 6 einen Vertikalschnitt durch die zweite Vorrichtung entlang der Linie C-C in Fig. 5;
Fig. 7 eine Draufsicht auf eine dritte erfindungsgemässe Vorrichtung;
Fig. 7a das Detail X aus Fig. 7;
Fig. 8 einen Vertikalschnitt durch die dritte Vorrichtung entlang der Linie D-D in Fig. 7;
Fig. 9 eine Draufsicht auf eine vierte erfindungsgemässe Vorrichtung;
Fig. 10 einen Vertikalschnitt durch die vierte Vorrichtung entlang der Linie F-F in Fig. 9;
Fig. 11 einen Vertikalschnitt durch die vierte Vorrichtung entlang der Linie E-E in Fig. 9;
Fig. 12 eine Seitenansicht einer der Hochspannungselektroden der Vorrichtungen; und
Fig. 13 eine Seitenansicht einer Variante der Hochspannungselektrode aus Fig. 12.

### WEGE ZUR AUSFÜHRUNG DER ERFINDUNG

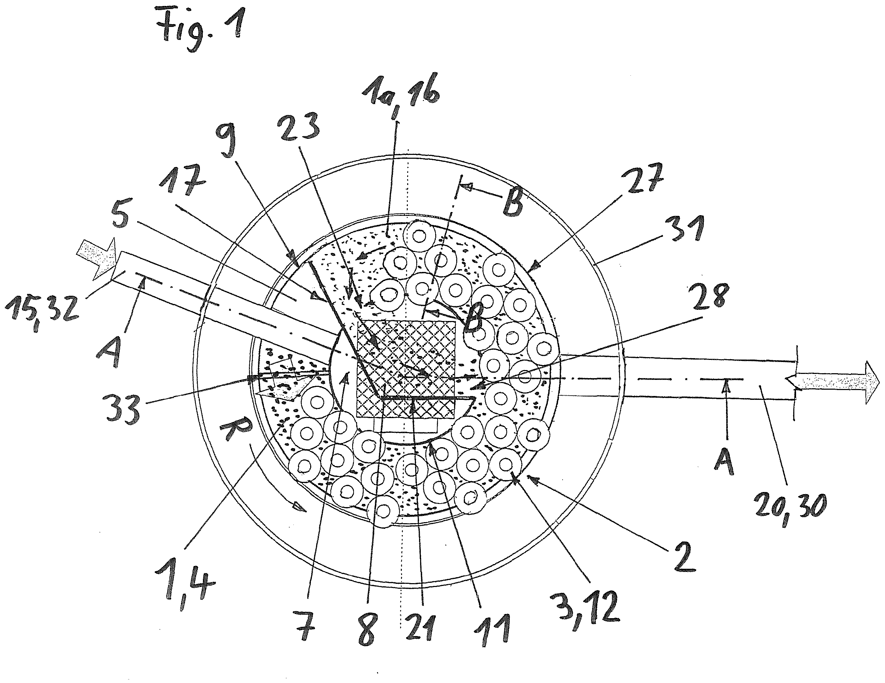

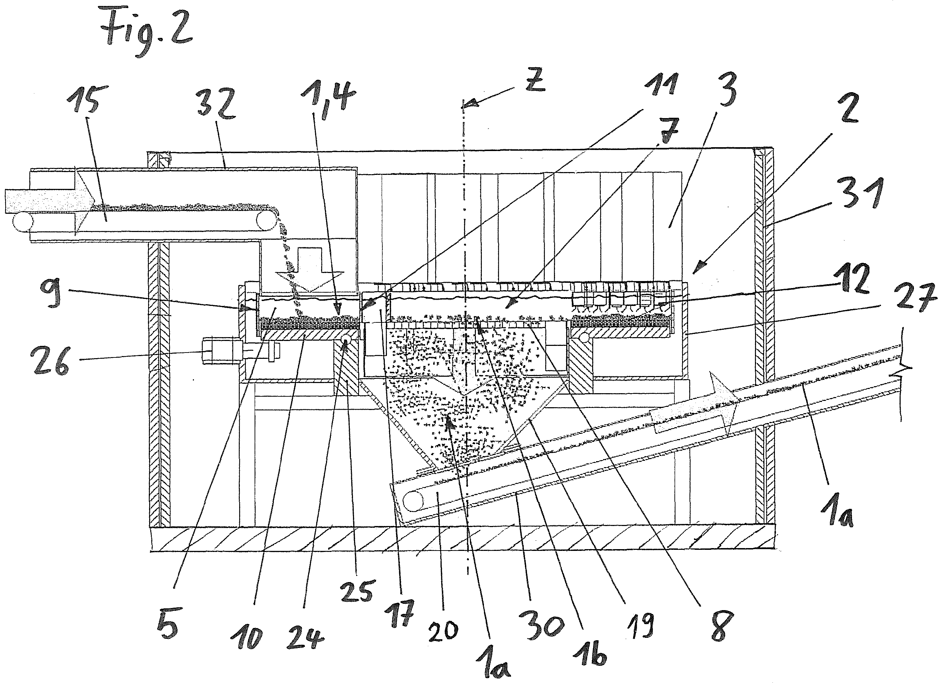

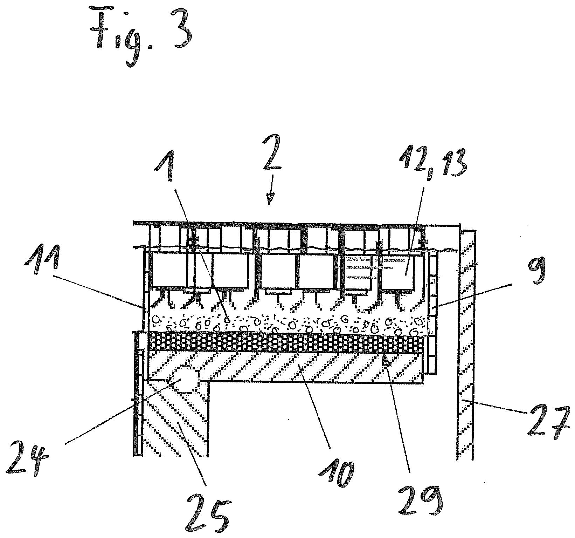

Die Figuren 1 bis 3 zeigen eine erste erfindungsgemässe Vorrichtung zum Fragmentieren von schüttfähigem Material 1 mittels Hochspannungsentladungen, einmal in einer Draufsicht von oben (Fig. 1), einmal in einem Vertikalschnitt entlang der Linie A-A in Fig. 1 (Fig. 2) und einmal in einem Teil-Vertikalschnitt entlang der Linie B-B in Fig. 1 (Fig. 3).

Wie zu erkennen ist, weist die Vorrichtung eine karussellartige Einrichtung 9, 10, 11, gebildet aus einer kreisringförmigen Bodenplatte 10, einer fest mit der Bodenplatte 10 verbundenen und von der Bodenplatte 10 senkrecht nach oben ragenden zylindrischen Aussenwand 9 und einer mit der Bodenplatte 10 nicht in Verbindung stehenden und senkrecht von der Bodenplatte 10 nach oben ragenden zylindrischen Innenwand 11 auf. Die Bodenplatte 10 ist eben und durchgehend geschlossen und ist mittels eines Rollenkranzes 24 auf einem kreisringförmigen Tragelement 25 einer feststehenden Tragstruktur gelagert, und wird im bestimmungsgemässen Betrieb mittels eines Antriebsmotors 26 in der Rotationsrichtung R um eine durch das Zentrum der Kreisringform der Bodenplatte 10 verlaufende vertikale Rotationsachse Z herum rotiert, wodurch das auf der Bodenplatte 10 aufliegende zu fragmentierende Material 1 einen kreisringförmigen bzw. kreisringsegmentförmigen Materialstrom 4 in der Rotationsrichtung R um die Rotationsachse Z herum bildet.

Die karussellartige Einrichtung 9, 10, 11 ist angeordnet in einem mit Wasser 5 (Prozessflüssigkeit) befüllten kreisrunden Becken 27, dessen Boden von dem kreisringförmigen Tragelement 25 durchdrungen wird. Die karussellartige Einrichtung 9, 10, 11 ist bis auf die oberen Begrenzungskanten der Aussenwand 9 und der Innenwand 11 vollständig in das Wasser 5 im Becken 27 eingetaucht. Im Bereich innerhalb des kreisringförmigen Tragelements 25 ist der Boden des Beckens 27 von einem kreisförmigen, sich nach unten erstreckenden Trichter 19 gebildet, dessen unteres Ende über einem Transportband 20 endet, welches schräg nach oben bis auf ein Niveau über dem Wasserspiegel des Beckens 27 fördert (hier aus Platzgründen nicht vollständig gezeigt) und in einem Gehäuse 30 angeordnet ist, das an das untere Trichterende angeschlossen ist und zusammen mit dem Becken 27 ein wasserdichtes Behältnis bildet. Das Becken 27 ist von einer ringförmigen Schutzwand 31 umgeben, durch welche das Gehäuse des Förderbands 30 und das Förderband 20 hindurchtreten.

Wie weiter zu erkennen ist, weist die Vorrichtung, angeordnet über der karussellartigen Einrichtung 9, 10, 11, eine Hochspannungselektroden-Anordnung 2 mit einer Vielzahl von matrixförmig angeordneten Hochspannungselektroden 12 auf, welche sich etwa über einen Bereich von 270° der Kreisringform der karussellartigen Einrichtung 9, 10, 11 erstreckt. Jede der Hochspannungselektroden 12 ragt dabei von oben bis knapp über die Oberfläche des in der karussellartigen Einrichtung 9, 10, 11 geführten kreisringsegmentförmigen Materialstromes 4 herab, wobei sie in das Wasser 5 eintaucht, und weist einen eigenen, direkt über ihr angeordneten Hochspannungsgenerator 3 auf, mit welchem sie im Betrieb mit Hochspannungspulsen beaufschlagt wird. In den Figuren ist der Übersichtlichkeit halber jeweils nur eine der Hochspannungselektroden mit der Bezugsziffer 12 und nur einer der Hochspannungsgeneratoren mit der Bezugsziffer 3 versehen.

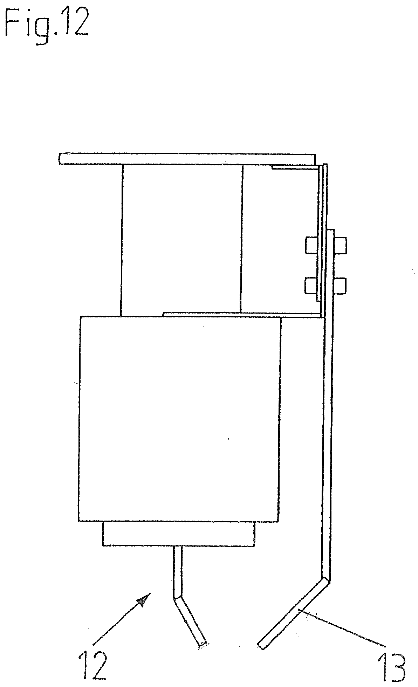

Wie aus Fig. 12 ersichtlich ist, welche eine der Hochspannungselektroden 12 der Hochspannungselektroden-Anordnung 2 dieser Vorrichtung in der Seitenansicht zeigt, weist jede der Hochspannungselektroden 12 eine eigene auf Erdpotential liegende Gegenelektrode 13 auf, welche derartig relativ zur jeweiligen Hochspannungselektrode 12 angeordnet ist, dass in dem in den Figuren dargestellten bestimmungsgemässen Betrieb durch das Beaufschlagen der jeweiligen Hochspannungselektrode 12 mit Hochspannungspulsen Hochspannungsdurchschläge zwischen der Hochspannungselektrode 12 und der ihr zugeordneten Gegenelektrode 13 durch das Material 1 des Materialstromes 4 hindurch erzeugt werden.

Wie weiter zu erkennen ist, weist die Vorrichtung ein in einem geschlossenen Gehäuse 32 angeordnetes Zuführungsförderband 15 auf, mit welchem stromaufwärts von der Hochspannungselektroden-Anordnung 2 zu fragmentierendes Material 1, im vorliegenden Fall Bruchstücke von Edelmetall-Erzgestein 1, auf die Bodenplatte 10 der karussellartigen Einrichtung 9, 10, 11 aufgegeben wird.

Die Höhe der als kreisringsegmentförmiger Materialstrom 4 unter der Hochspannungselektroden-Anordnung 2 hindurchgeführten Materialschüttung 1 wird vor dem Einlauf in den zwischen der karussellartigen Einrichtung 9, 10, 11 und der Hochspannungselektroden-Anordnung 2 gebildeten Bereich (Prozesszone) durch ein Durchlassbegrenzungsblech 33 festgelegt.

Stromabwärts von der Hochspannungselektroden-Anordnung 2 befindet sich ein feststehendes erstes Leitblech 17, welches sich von der Aussenwand 9 der karussellartigen Einrichtung 9, 10, 11 durch eine erste Unterbrechung 23 in deren Innenwand 11 in einen Bereich 7 im Zentrum der karussellartigen Einrichtung 9, 10, 11 erstreckt und im dargestellt bestimmungsgemässen Betrieb den aus der Prozesszone austretenden Materialstrom 4 im Wesentlichen vollständig über die erste Unterbrechung 23 in der Innenwand 11 in den zentralen Bereich 7 führt.

Der Boden des zentralen Bereichs 7 ist als ebener Siebboden 8 ausgebildet, mit einer Sieböffnungsgrösse die derart bemessen ist, dass auf Zielgrösse fragmentiertes Material 1a durch die Sieböffnungen hindurchtritt und in den darunter angeordneten Trichter 19 fällt, während Material 1b, welches grösser ist als die Zielgrösse, auf dem Siebboden 8 liegen bleibt. Das fertig prozessierte bzw. auf Zielgrösse zerkleinerte Material 1a wird von dem Trichter 19 auf das Förderband 20 geleitet, mit welchem es aus der Vorrichtung heraus transportiert wird.

Das nicht-fertig prozessierte bzw. noch nicht auf Zielgrösse zerkleinerte Material 1b wird durch das nachrückende Material 1 über den Siebboden 8 geschoben und von einem an das erste Leitblech 17 anschliessenden feststehenden zweiten Leitblech 21 über eine zweite Unterbrechung 28 in der Innenwand 11 aus dem zentralen Bereich 7 zurück in den kreisringsegmentförmigen Materialstrom 4 geführt, mit welchem es erneut an einem Teil der Hochspannungselektroden 12 der Hochspannungselektroden-Anordnung 2 vorbeigeführt wird und dabei mit Hochspannungsdurchschlägen beaufschlagt wird.

Wie aus Fig. 3 hervorgeht, welche einen Vertikalschnitt durch einen Teil der ersten Vorrichtung im Bereich der Prozesszone entlang der Linie B-B in Fig. 1 zeigt, weist die Bodenplatte 10 der karussellartigen Einrichtung 9, 10, 11 eine mit einer verschleisshemmenden Schicht 29 aus Gummi belegte Oberseite auf, auf welcher das zu prozessierende Material 1 aufliegt.

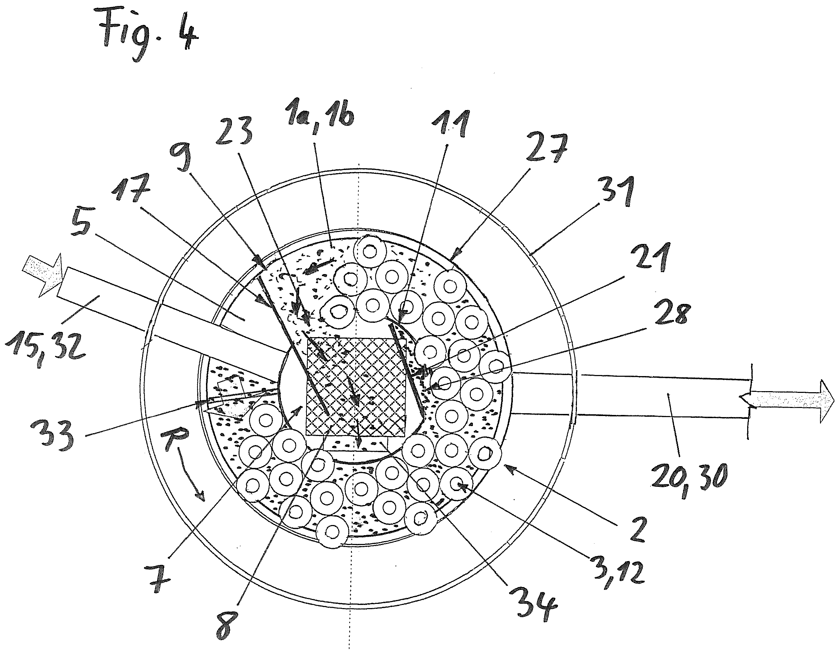

Fig. 4 zeigt eine Draufsicht auf die Vorrichtung in einer anderen Betriebsart. Wie zu ersehen ist, ist hier das zweite Leitblech 21 in einer Position angeordnet, in welcher es die zweite Unterbrechung 28 in der Innenwand 11 von der Seite des zentralen Bereichs 7 aus verschliesst und einen Abführungsschacht 34 freigibt, in welchen das nicht-fertig prozessierte bzw. noch nicht auf Zielgrösse zerkleinerte Material 1b, welches durch das nachrückende Material 1 über den Siebboden 8 geschoben wird, hineinfällt und sodann mit (nicht dargestellten) Einrichtungen von der Vorrichtung weggeführt wird.

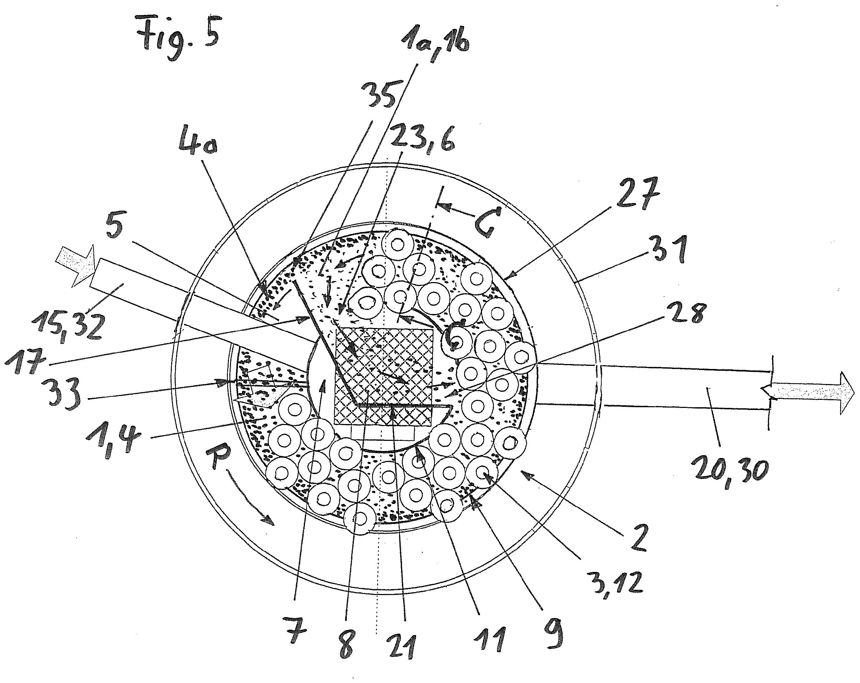

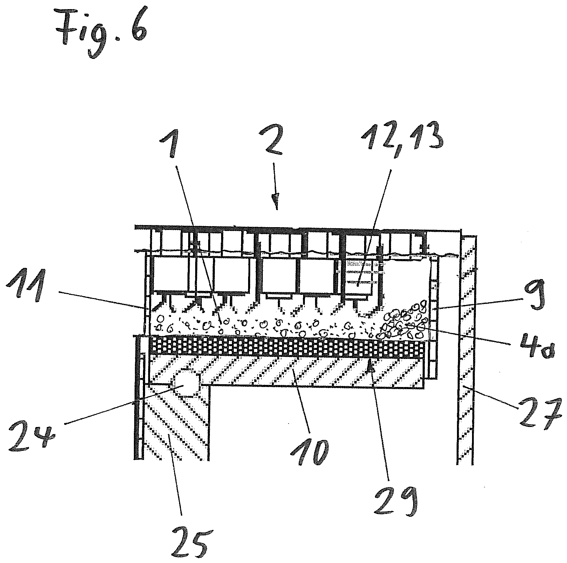

Die Figuren 5 und 6 zeigen eine zweite erfindungsgemässe Vorrichtung zum Fragmentieren von schüttfähigem Material 1 mittels Hochspannungsentladungen, einmal in einer Draufsicht von oben (Fig. 5) und einmal in einem Teil-Vertikalschnitt entlang der Linie C-C in Fig. 5 (Fig. 6).

Diese Vorrichtung unterscheidet sich von der in den Figuren 1 bis 3 gezeigten Vorrichtung im Wesentlichen dadurch, dass sich hier das stromabwärts von der Hochspannungselektroden-Anordnung 2 angeordnete erste Leitblech 17 nicht vollständig bis zur Aussenwand 9 der karussellartigen Einrichtung 9, 10, 11 erstreckt, so dass zwischen dessen äusserem Ende und der Aussenwand 9 eine Öffnung 35 gebildet ist, durch welche das Material 1 im äusseren Randbereich des Materialstromes 4 hindurchtreten kann, so dass es nicht von dem ersten Leitblech 17 in den zentralen Bereich 7 geführt wird, sondern als durchgehender kreisringförmiger Materialstrom 4a fortwährend umläuft. Entsprechend wird hier nicht der gesamte aus der Prozesszone austretenden Materialstrom 4 in den zentralen Bereich 7 geführt, sondern nur das Material 1 aus dessen mittlerem Bereich und aus dessen inneren Randbereich.

Wie insbesondere aus Fig. 6 ersichtlich ist, besteht ein weiterer Unterschied dieser Vorrichtung gegenüber der in den Figuren 1 bis 4 gezeigten Vorrichtung darin, dass hier die Hochspannungselektroden 12 der Hochspannungselektroden-Anordnung 2 derartig angeordnet sind, dass der umlaufende Materialstrom 4a im äusseren Randbereich des Materialstromes 4 im Wesentlichen nicht mit Hochspannungsdurchschlägen beaufschlagt wird. Entsprechend weist das Material 1 im äusseren Randbereich des Materialstromes 4 im Wesentlichen seine ursprüngliche Stückigkeit auf.

Ansonsten weist diese zweite Vorrichtung einen identischen Aufbau auf wie die erste Vorrichtung.

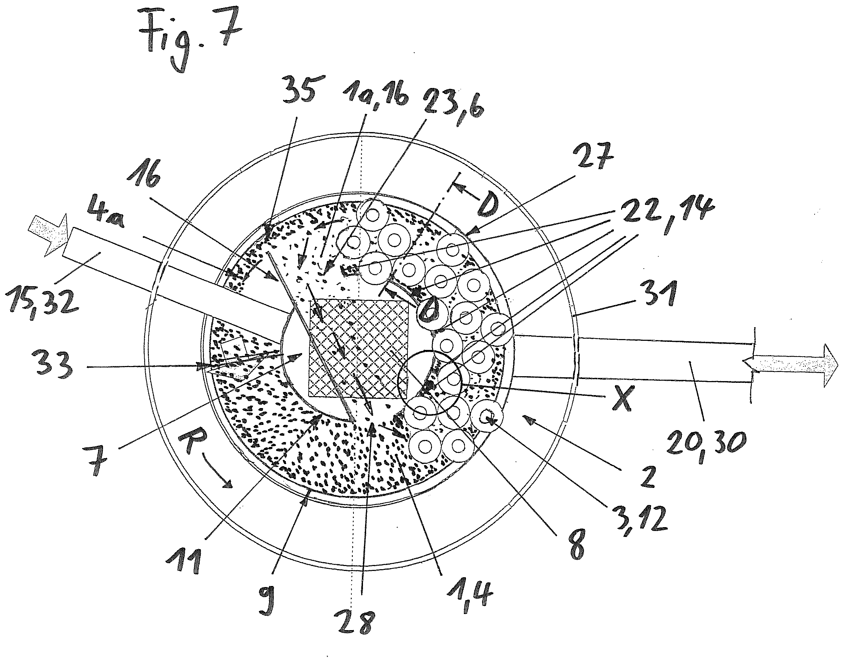

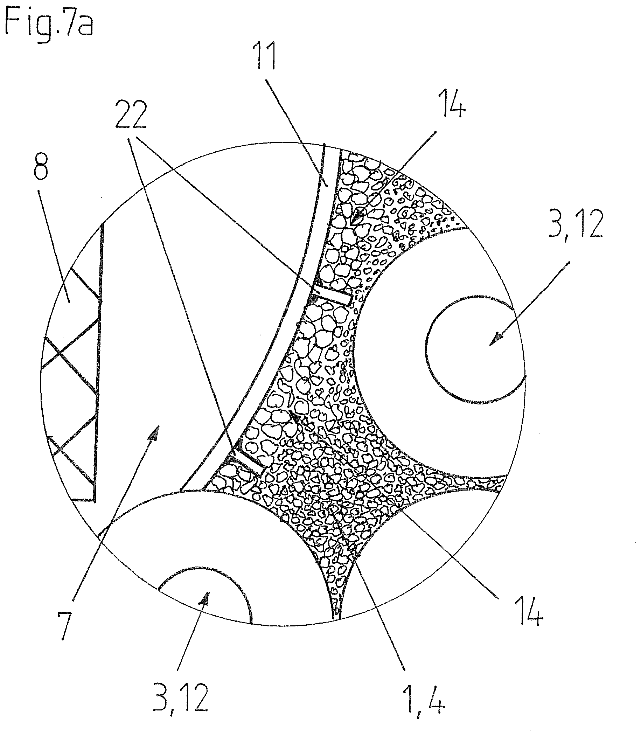

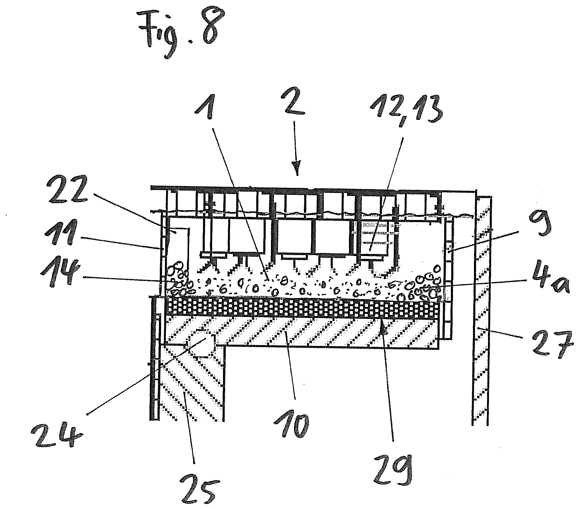

Die Figuren 7 und 8 zeigen eine dritte erfindungsgemässe Vorrichtung zum Fragmentieren von schüttfähigem Material 1 mittels Hochspannungsentladungen, einmal in einer Draufsicht von oben (Fig. 7) und einmal in einem Teil-Vertikalschnitt entlang der Linie D-D in Fig. 7 (Fig. 8).

Diese Vorrichtung unterscheidet sich von der in den Figuren 5 und 6 gezeigten Vorrichtung erst einmal dadurch, dass hier die matrixförmige Hochspannungselektroden-Anordnung 2 weniger Hochspannungselektroden 12 aufweist und sich lediglich über einen Bereich von etwa 170° der Kreisringform der karussellartigen Einrichtung 9, 10, 11 erstreckt.

Wie in Zusammenschau mit Fig. 7a erkennbar ist, welche das Detail X aus Fig. 7 zeigt, besteht ein weiterer Unterschied darin, dass die Innenwand 11 der karussellartigen Einrichtung 9, 10, 11 in dem Bereich, in welchem sich die Hochspannungselektroden-Anordnung 2 über der karussellartigen Einrichtung 9, 10, 11 erstreckt, auf ihrer dem Materialstrom 4 zugewandten Seite mehrere radial in den Materialstrom 4 hineinstehende Staurippen 22 aufweist, mit denen das Material 1 im inneren Randbereich des Materialstromes 4 zu unbewegten Materialzonen 14 aufgestaut wird. Dabei sind die Hochspannungselektroden 12 der Hochspannungselektrodenanordnung 2 hier derartig angeordnet, dass die unbewegten Materialzonen 14 im inneren Randbereich des Materialstromes 4 im Wesentlichen nicht mit Hochspannungsdurchschlägen beaufschlagt werden. Entsprechend weist das Material 1 in diesen Zonen 14 im Wesentlichen seine ursprüngliche Stückigkeit auf.

Noch ein weiterer Unterschied besteht darin, dass diese Vorrichtung ein einziges feststehendes Leitblech 16 aufweist, welches stromabwärts von der Hochspannungselektroden-Anordnung 2 das Material 1 aus dem mittleren Bereich und aus dem sich entlang der unbewegten Materialzonen 14 bewegenden inneren Randbereich des Materialstromes 4 über die erste Unterbrechung 23 in der Innenwand 11 in den zentralen Bereich 7 und auf den Siebboden 8 führt und zudem auch das auf dem Siebboden 8 liegenbleibende nicht auf Zielgrösse zerkleinerte bzw. nicht-fertig prozessierte Material 1b über eine zweite Unterbrechung 28, welche an einer Position stromaufwärts von der Hochspannungselektroden-Anordnung 2 angeordnet ist, zurück in den Materialstrom 4 führt.

Ansonsten weist diese dritte Vorrichtung einen identischen Aufbau auf wie die zweite Vorrichtung.

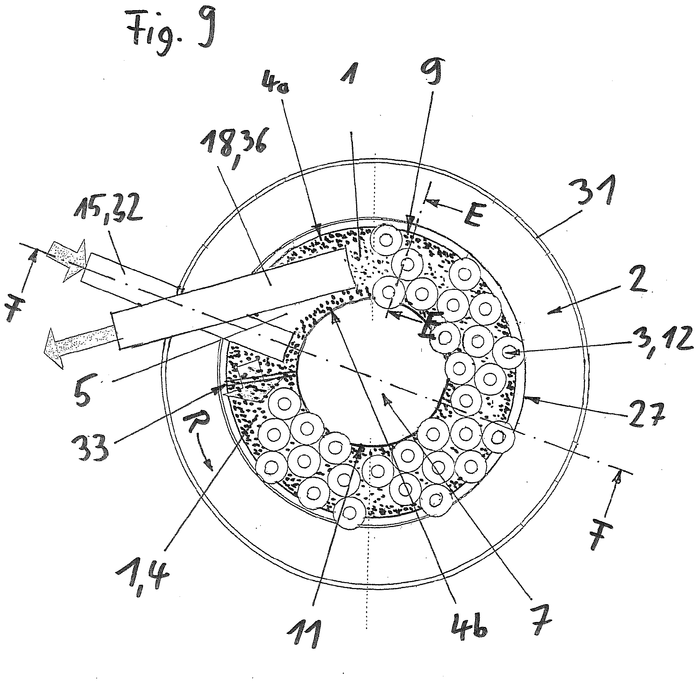

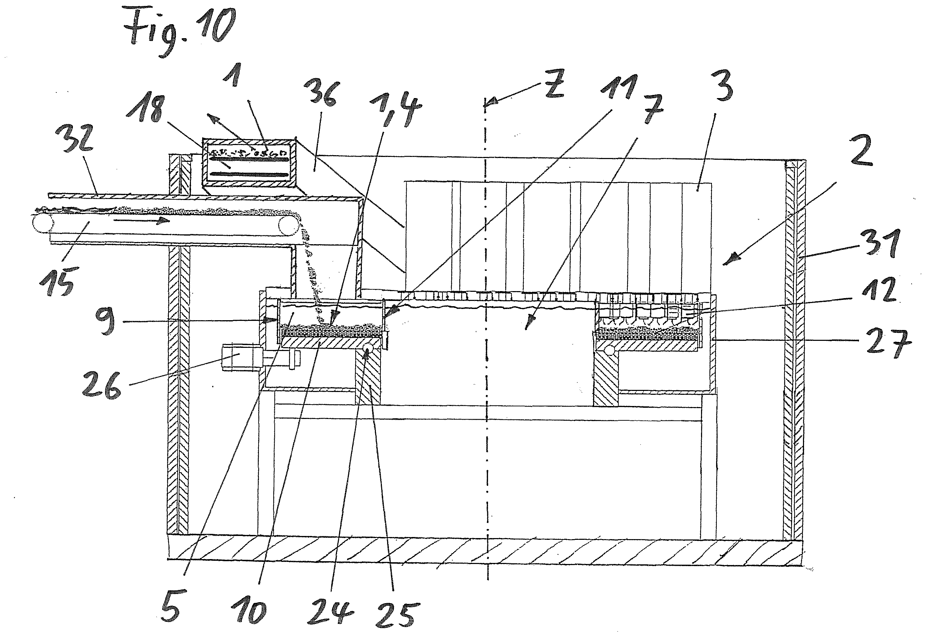

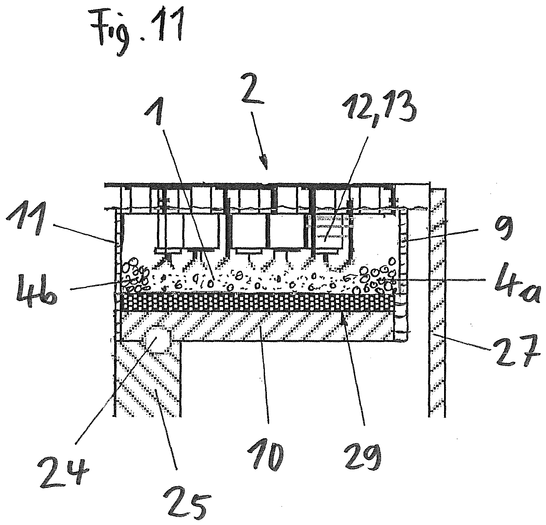

Die Figuren 9 bis 11 zeigen eine vierte erfindungsgemässe Vorrichtung zum Fragmentieren von schüttfähigem Material 1 mittels Hochspannungsentladungen, einmal in einer Draufsicht von oben (Fig. 9), einmal in einem Vertikalschnitt entlang der Linie F--F in Fig. 9 (Fig. 10) und einmal in einem Teil-Vertikalschnitt entlang der Linie E-E in Fig. 9 (Fig. 11).

Diese Vorrichtung unterscheidet sich von den bisher in den Figuren 1 bis 8 gezeigten Vorrichtungen dadurch, dass sie keine Einrichtungen aufweist, mit denen der aus der Prozesszone austretende Materialstrom 4 oder ein Teil desselben in das Zentrum 7 der karussellartigen Einrichtung 9, 10, 11 geführt wird. Die Innenwand 11 weist hier keine Unterbrechungen auf und ist fest mit der Bodenplatte 10 der karussellartigen Einrichtung 9, 10, 11 verbunden, so dass sie zusammen mit dieser und mit der Aussenwand 9 um die Rotationsachse Z herum rotiert. Die karussellartige Einrichtung 9, 10, 11 bildet in diesem Fall also eine geschlossene kreisringförmige Rinne, welche um die Rotationsachse Z herum rotiert.

Bei der hier gezeigten Vorrichtung wird das Materials 1 aus dem mittleren Bereich des Materialstromes 4, welcher aus der zwischen der Bodenplatte 10 der karussellartigen Einrichtung 9, 10, 11 und der Hochspannungselektroden-Anordnung 2 gebildeten Prozesszone austritt, mittels eines in einem Gehäuse 36 angeordneten Entnahmeförderbands 18, welches mittels eines (nicht dargestellten) Einlaufblechs das Material 1 von der Bodenplatte 10 her aufnimmt, entnommen und von der Vorrichtung weggeführt.

Das Material 1 im äusseren Randbereich und im inneren Randbereich des Materialstromes 4 verbleibt auf der Bodenplatte 10 und läuft jeweils als durchgehender kreisringförmiger Materialteilstrom 4a, 4b um.

Im Gegensatz zu der in den Figuren 1 bis 4 gezeigten ersten Vorrichtung sind hier die Hochspannungselektroden 12 der Hochspannungselektrodenanordnung 2 derartig angeordnet, dass die umlaufenden Materialteilströme 4a, 4b im äusseren und im inneren Randbereich des Materialstromes 4 im Wesentlichen nicht mit Hochspannungsdurchschlägen beaufschlagt werden. Entsprechend weist das Material 1 in diesen Materialteilströmen 4a, 4b im Wesentlichen seine ursprüngliche Stückigkeit auf.

Stromabwärts der Entnahmestelle des Entnahmeförderbands 18 wird über das Zuführungsförderband 15 neues zu fragmentierendes Material 1 in den mittleren Bereich der kreisringförmigen Bodenplatte 10 aufgegeben, so dass stromabwärts von dieser Aufgabestelle wieder ein geschlossener Materialstrom 4 aus im Wesentlichen unprozessiertem Material 1 vorliegt, welcher der Prozesszone zugeführt wird.

Ansonsten weist diese vierte Vorrichtung einen identischen Aufbau auf wie die erste Vorrichtung.

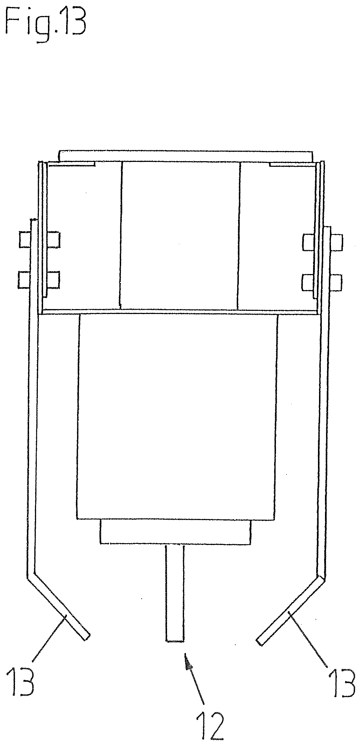

Fig. 13 zeigt eine weitere Hochspannungselektrode 12 für die zuvor beschriebenen erfindungsgemässen Vorrichtungen, welche sich von der in Fig. 12 gezeigten im Wesentlichen dadurch unterscheidet, dass sie zwei identische, sich spiegelbildlich gegenüberliegende Gegenelektroden 13 aufweist. Ein weiterer Unterschied besteht darin, dass diese Hochspannungselektrode 12 eine gerade Elektrodenspitze aufweist.

Während in der vorliegenden Anmeldung bevorzugte Ausführungen der Erfindung beschrieben sind, ist klar darauf hinzuweisen, dass die Erfindung nicht auf diese beschränkt ist und auch in anderer Weise innerhalb des Umfangs der nun folgenden Ansprüche ausgeführt werden kann.

## Patentansprüche

1. Verfahren zur Fragmentierung und/oder Schwächung von schüttfähigem Material (1) mittels Hochspannungsentladungen, umfassend die Schritte:
a) Bereitstellen einer Hochspannungselektroden-Anordnung (2), welche einem oder mehreren Hochspannungsgeneratoren (3) zugeordnet ist, mittels welchem oder welchen sie mit Hochspannungspulsen beaufschlagbar ist;
b) Vorbeiführen eines ring- oder bogenförmigen, insbesondere kreisringförmigen oder kreisringsegmentförmigen Materialstromes (4) aus schüttfähigem Material (1), eingetaucht in einer Prozessflüssigkeit (5), an der Hochspannungselektroden-Anordnung (2); und
c) Erzeugen von Hochspannungsdurchschlägen durch den Materialstrom (4) während dem Vorbeiführen desselben an der Hochspannungselektroden-Anordnung (2) durch Beaufschlagung der Hochspannungselektroden-Anordnung (2) mit Hochspannungspulsen,
wobei stromaufwärts von der Hochspannungselektroden-Anordnung (2) Material (1) zu dem Materialstrom (4) zugeführt wird und stromabwärts von der Hochspannungselektroden-Anordnung (2) Material (1) vom Materialstrom (4) weggeführt wird.

2. Verfahren nach Anspruch 1, wobei kein Material (1) in dem Bereich vom Materialstrom (4) weggeführt wird, in welchem mittels der Hochspannungselektroden-Anordnung (2) Hochspannungsdurchschläge durch den Materialstrom (4) erzeugt werden.

3. Verfahren nach einem der vorangehenden Ansprüche, wobei stromabwärts von der Hochspannungselektroden-Anordnung (2) ein Teilstrom (6) des Materialstromes (4) oder der gesamte Materialstrom (4) in einen zentralen Bereich (7) geführt wird, welcher von dem ring- oder bogenförmigen Materialstrom (4) umgeben ist.

4. Verfahren nach Anspruch 3, wobei zumindest ein Teil des in den zentralen Bereich (7) geführten Materials (1) aus diesem Bereich weggeführt wird.

5. Verfahren nach einem der Ansprüche 3 bis 4, wobei zumindest ein Teil des in den zentralen Bereich (7) geführten Materials (1) aus diesem Bereich zurück in den ring- oder bogenförmigen Materialstrom (4) geführt wird.

6. Verfahren nach Anspruch 4 und nach Anspruch 5, wobei das in den zentralen Bereich (7) geführte Material (1) mittels einer im zentralen Bereich (7) angeordneten Separationsvorrichtung (8), insbesondere mittels eines Siebes (8), in fertig prozessiertes Material (1a) und nicht-fertig prozessiertes Material (1b) aufgeteilt wird und das fertig prozessierte Material (1a) aus dem zentralen Bereich (7) weggeführt wird, während das nicht-fertig prozessierte Material (1b) in den ring- oder bogenförmigen Materialstrom (4) zurückgeführt wird.

7. Verfahren nach einem der vorangehenden Ansprüche, wobei der Materialstrom (4) dadurch gebildet wird, dass das Material (1) auf eine karussellartige Vorrichtung (9, 10, 11) aufgegeben wird und durch Rotation dieser Vorrichtung (9, 10, 11) um eine durch den zentralen Bereich (7) verlaufende, im Wesentlichen vertikale Achse (Z) herum an der Hochspannungselektroden-Anordnung (2) vorbeigeführt wird.

8. Verfahren nach einem der vorangehenden Ansprüche, wobei eine Hochspannungselektroden-Anordnung (2) verwendet wird, welche eine matrixartige Anordnung aus mehreren Hochspannungselektroden (12) umfasst, die jeweils mit Hochspannungspulsen beaufschlagt werden.

9. Verfahren nach einem der vorangehenden Ansprüche, wobei als Gegenelektrode für die Hochspannungselektroden der Hochspannungselektroden-Anordnung ein die Unterseite des Materialstromes im Bereich der Hochspannungselektroden-Anordnung begrenzendes Element verwendet wird, und insbesondere, wobei dieses Element der Boden einer karussellartigen Vorrichtung ist, mit welcher der Materialstrom an der Hochspannungselektroden-Anordnung vorbeigeführt wird.

10. Verfahren nach einem der Ansprüche 1 bis 8, wobei jeder Hochspannungselektrode (12) eine oder mehrere eigene Gegenelektroden (13) zugeordnet sind, welche seitlich neben und/oder unter der jeweiligen Hochspannungselektrode (12) angeordnet ist oder sind, derart, dass durch das Beaufschlagen der jeweiligen Hochspannungselektrode (12) mit Hochspannungspulsen Hochspannungsdurchschläge zwischen der Hochspannungselektrode (12) und der oder den Gegenelektroden (13) durch das Material (1) des Materialstromes (4) hindurch erzeugt werden.

11. Verfahren nach einem der vorangehenden Ansprüche, wobei das Material (1) des äusseren und/oder des inneren Randbereichs des ring- oder bogenförmigen Materialstromes (4) nicht weggeführt wird, sondern als durchgehender ring- oder bogenförmiger Materialstrom (4a, 4b) fortwährend umläuft.

12. Verfahren nach einem der vorangehenden Ansprüche, wobei an einer ersten Position stromabwärts von der Hochspannungselektroden-Anordnung Material aus dem mittleren Bereich des Materialstromes weggeführt wird, an einer zweiten Position stromabwärts von der ersten Position das Material des äusseren und/oder des inneren Randbereichs zumindest zum Teil in die Mitte des Materialstromes geführt wird und an einer dritten Position stromabwärts von der zweiten Position neues Material in den äusseren und/oder den inneren Randbereich des Materialstroms zugeführt wird, bevor dieser erneut an der Hochspannungselektroden-Anordnung vorbeigeführt und mit Hochspannungsdurchschlägen beaufschlagt wird.

13. Verfahren nach einem der vorangehenden Ansprüche, wobei der innere und/oder der äussere Randbereich des Materialstromes (4) in dem Bereich, in welchem Hochspannungsdurchschläge durch das Material (1) des Materialstromes erzeugt werden, von im Wesentlichen unbewegten Bereichen (14) aus dem gleichen Material (1) begrenzt wird bzw. werden.

14. Verfahren nach Anspruch 13, wobei die im Wesentlichen unbewegten Bereiche (14) dadurch erzeugt werden, dass der innere und/oder der äussere Randbereich des Materialstromes (4) stromabwärts der Hochspannungselektroden-Anordnung (2) aufgestaut wird bzw. werden.

15. Verfahren nach Anspruch 11 und nach einem der Ansprüche 13 bis 14, wobei das Material (1) des äusseren Randbereichs des ring- oder bogenförmigen Materialstromes (4) nicht weggeführt wird, sondern als durchgehender ring- oder bogenförmiger Materialstrom (4a) fortwährend umläuft, und wobei der innere Randbereich des Materialstromes (4) in dem Bereich, in welchem Hochspannungsdurchschläge durch das Material (1) des Materialstromes (4) erzeugt werden, von im Wesentlichen unbewegten Bereichen (14) aus dem gleichen Material (1) begrenzt wird.

16. Verfahren nach Anspruch 12 und nach einem der Ansprüche 13 bis 14, wobei das Material (1) des äusseren Randbereichs des ring- oder bogenförmigen Materialstromes (4) an der zweiten Position zumindest zum Teil in die Mitte des Materialstromes (4) geführt wird und an der dritten Position neues Material (1) in den äusseren Randbereich des Materialstroms (4) zugeführt wird, bevor dieser erneut an der Hochspannungselektroden-Anordnung (2) vorbeigeführt und mit Hochspannungsdurchschlägen beaufschlagt wird.

17. Verfahren nach einem der Ansprüche 3 bis 6 und nach einem der Ansprüche 15 bis 16, wobei stromabwärts von der Hochspannungselektroden-Anordnung (2) Material (1) aus dem mittleren Bereich des Materialstromes (4) weggeführt und in den zentralen Bereich (7) geführt wird.

18. Verfahren nach einem der vorangehenden Ansprüche, wobei die Hochspannungselektroden-Anordnung eine oder mehrere unabhängig voneinander entlang von insbesondere parallelen, insbesondere vertikal orientierten Verschiebeachsen verschiebbare Hochspannungselektroden aufweist, und wobei diese Hochspannungselektroden während dem Vorbeiführen des Materialstroms an der Hochspannungselektroden-Anordnung und dem Erzeugen von Hochspannungsdurchschlägen durch den Materialstrom derartig entlang ihrer Verschiebeachsen verschoben werden, dass sie jeweils der Kontur des Materialstroms mit einem bestimmten Abstand folgen oder in Kontakt mit der Oberfläche des Materialstroms dessen Kontur folgen und dabei in die Prozessflüssigkeit eingetaucht sind.

19. Verfahren nach Anspruch 10 und nach Anspruch 18, wobei die der jeweiligen Hochspannungselektrode zugeordnete Gegenelektrode jeweils zusammen mit der jeweiligen Hochspannungselektrode entlang der Verschiebeachse verschoben wird.

20. Vorrichtung zur Durchführung des Verfahrens nach einem der vorangehenden Ansprüche, umfassend:
a) eine Hochspannungselektroden-Anordnung (2), welche einem oder mehreren Hochspannungsgeneratoren (3) zugeordnet ist, mittels welchem oder welchen sie mit Hochspannungspulsen beaufschlagbar ist;
b) eine karussellartige Einrichtung (9, 10, 11), mittels welcher, insbesondere durch Rotation derselben um eine zentrale und im Wesentlichen vertikale Achse (Z) herum, schüttfähiges Material als ring- oder bogenförmiger, insbesondere kreisringförmiger oder kreisringsegmentförmiger Materialstrom (4) eingetaucht in ein Prozessfluid (5) an der Hochspannungselektroden-Anordnung (2) vorbeigeführt werden kann, derart, dass bei einem Beaufschlagen der Hochspannungselektroden-Anordnung (2) mit Hochspannungspulsen Hochspannungsdurchschläge durch das Material (1) des Materialstroms (4) während dem Vorbeiführen desselben an der Hochspannungselektroden-Anordnung (2) erzeugbar sind;
c) Mittel (15, 16) zum Zuführen von Material (1) stromaufwärts von der Hochspannungselektroden-Anordnung (2) zu dem im bestimmungsgemässen Betrieb mittels der karussellartigen Einrichtung erzeugten ring- oder bogenförmigen Materialstrom (4); und
d) Mittel (16, 17, 18) zum Wegführen von Material (1, 1a) stromabwärts von der Hochspannungselektroden-Anordnung (2) von dem im bestimmungsgemässen Betrieb mittels der karussellartigen Einrichtung (9, 10, 11) erzeugten ring- oder bogenförmigen Materialstrom (4).

21. Vorrichtung nach Anspruch 20, wobei die karussellartige Einrichtung in dem Bereich, in welchem sie im bestimmungsgemässen Betrieb das den ring- oder bogenförmigen Materialstrom bildende Material trägt, Sieböffnungen als Mittel zum Wegführen von Material aufweist, über welche Material, das kleiner ist als die Sieböffnungen, vom Materialstrom weggeführt werden kann.

22. Vorrichtung nach Anspruch 20, wobei die karussellartige Einrichtung (9, 10, 11) in dem Bereich, in welchem sie im bestimmungsgemässen Betrieb das den ring- oder bogenförmigen Materialstrom (4) bildende Material (1) trägt, einen geschlossenen Boden bildet, und wobei die Mittel (17) zum Wegführen von Material (1) derartig ausgebildet sind, insbesondere in Form einer oder mehrerer Leiteinrichtungen (17), dass mit ihnen ein Teilstrom des Materialstromes (4) oder der gesamte Materialstrom (4) in einen zentralen Bereich (7) im Zentrum der karussellartigen Einrichtung (9, 10, 11) geführt werden kann, welcher von dem ring- oder bogenförmigen Materialstrom (4) umgeben ist.

23. Vorrichtung nach Anspruch 22, wobei Mittel (19, 20) vorhanden sind zum Wegführen zumindest eines Teils des in den zentralen Bereich (7) geführten Materials (1) aus dem zentralen Bereich (7) heraus und weg von der karussellartigen Einrichtung (9, 10, 11), und insbesondere, wobei diese Mittel eine Materialrutsche oder einen Trichter (19) umfassen.

24. Vorrichtung nach einem der Ansprüche 22 bis 23, wobei Mittel (21) vorhanden sind zum Zurückführen zumindest eines Teils des in den zentralen Bereich (7) geführten Materials (1) in den ring- oder bogenförmigen Materialstrom (4), und insbesondere, wobei diese Mittel (21) eine oder mehrere Leiteinrichtungen (21) umfassen.

25. Vorrichtung nach Anspruch 23 und nach Anspruch 24, wobei in dem zentralen Bereich (7) eine Separationsvorrichtung (8) angeordnet ist, insbesondere umfassend ein Sieb (8), mittels welcher das in diesen Bereich (7) geführte Material (1) in fertig prozessiertes Material (1a) und nicht-fertig prozessiertes Material (1b) aufgeteilt werden kann, wobei dabei das fertig prozessierte Material (1a) mit den Mitteln (19, 20) zum Wegführen des Materials (1) aus dem zentralen Bereich (7) abgeführt werden kann und das nicht-fertig prozessierte Material (1b) mit den Mitteln (21) zum Zurückführen des Materials (1) in den ring- oder bogenförmigen Materialstrom (4) zugeführt werden kann.

26. Vorrichtung nach einem der Ansprüche 20 bis 25, wobei die Vorrichtung Mittel (22) aufweist, insbesondere eine oder mehrere Staueinrichtungen (22), mit denen im bestimmungsgemässen Betrieb bewirkt werden kann, dass der innere Randbereich und/oder der äussere Randbereich des ring- oder bogenförmigen Materialstromes (4) in dem Bereich, in welchem Hochspannungsdurchschläge durch das Material (1) des Materialstromes (4) erzeugt werden, im Wesentlichen von unbewegten Bereichen (14) aus dem gleichen Material (1) begrenzt wird bzw. werden.

27. Vorrichtung nach einem der Ansprüche 20 bis 26, wobei die Vorrichtung derartig ausgebildet ist, dass im bestimmungsgemässen Betrieb das Material (1) des inneren Randbereichs und/oder des äusseren Randbereichs des ring- oder bogenförmigen Materialstromes (4) nicht stromabwärts von der Hochspannungselektroden-Anordnung (2) von dem Materialstrom weggeführt wird, sondern als durchgehender ring- oder bogenförmiger Materialteilstrom (4a, 4b) fortwährend umläuft.

28. Vorrichtung nach einem der Ansprüche 20 bis 27, wobei die Vorrichtung derartig ausgebildet ist, dass im bestimmungsgemässen Betrieb an einer ersten Position stromabwärts von der Hochspannungselektroden-Anordnung Material aus dem mittleren Bereich des Materialstromes weggeführt wird, an einer zweiten Position stromabwärts von der ersten Position das Material des äusseren und/oder des inneren Randbereichs zumindest zum Teil in die Mitte des Materialstromes geführt wird und an einer dritten Position stromabwärts von der zweiten Position neues Material in den äusseren und/oder den inneren Randbereich des Materialstroms zugeführt wird, bevor dieser erneut an der Hochspannungselektroden-Anordnung vorbeigeführt und mit Hochspannungsdurchschlägen beaufschlagt wird.

29. Vorrichtung nach Anspruch 26 und nach Anspruch 27, wobei die Vorrichtung derartig ausgebildet ist, dass das Material (1) des äusseren Randbereichs des ring- oder bogenförmigen Materialstromes (4) nicht weggeführt wird, sondern als durchgehender ring- oder bogenförmiger Materialstrom (4a) fortwährend umläuft, und wobei der innere Randbereich des Materialstromes (4) in dem Bereich, in welchem Hochspannungsdurchschläge durch das Material (1) des Materialstromes (4) erzeugt werden, von im Wesentlichen unbewegten Bereichen (14) aus dem gleichen Material (1) begrenzt sind.

30. Vorrichtung nach Anspruch 27 und nach Anspruch 28, wobei die Vorrichtung derartig ausgebildet ist, dass das Material des äusseren Randbereichs des ring- oder bogenförmigen Materialstromes an der zweiten Position zumindest zum Teil in die Mitte des Materialstromes geführt wird und an der dritten Position neues Material in den äusseren Randbereich des Materialstroms zugeführt wird, bevor dieser erneut an der Hochspannungselektroden-Anordnung vorbeigeführt und mit Hochspannungsdurchschlägen beaufschlagt wird.

31. Vorrichtung nach einem der Ansprüche 20 bis 30, wobei der Bereich der karussellartigen Einrichtung (9, 10, 11), in welchem diese im bestimmungsgemässen Betrieb das den ring- oder bogenförmigen Materialstrom (4) bildende Material (1) trägt, an seinem Aussenumfang von einer umfangsmässig geschlossenen Begrenzungswand (9) begrenzt ist, und wobei die Vorrichtung derartig ausgebildet ist, dass diese Begrenzungswand (9) beim bestimmungsgemässen Betrieb der Vorrichtung zusammen mit dem Material (1) des Materialstromes (4) bewegt wird.

32. Vorrichtung nach einem der Ansprüche 20 bis 31, wobei der Bereich der karussellartigen Einrichtung (9, 10, 11), in welchem diese im bestimmungsgemässen Betrieb das den ring- oder bogenförmigen Materialstrom (4) bildende Material (1) trägt, an seinem Innenumfang von einer feststehenden Begrenzungswand (11) begrenzt ist, welche stromabwärts von der Hochspannungselektroden-Anordnung (2) eine Unterbrechung (23) aufweist, und wobei die Mittel (17, 18) zum Wegführen von Material (1) von dem Materialstrom (4) derartig ausgebildet sind, dass im bestimmungsgemässen Betrieb Material (1) vom ring- oder bogenförmigen Materialstrom (4) durch diese Unterbrechung (23) hindurch weggeführt wird, in einen zentralen Bereich (7) im Zentrum der karussellartigen Einrichtung (9, 10, 11), welcher von dem ring- oder bogenförmigen Materialstrom (4) umgeben ist.

33. Vorrichtung nach Anspruch 31 und nach Anspruch 32, wobei die Mittel (17) zum Wegführen von Material (1) von dem Materialstrom (4) derartig ausgebildet oder einstellbar sind, dass der gesamte ring- oder bogenförmige Materialstrom (4) im bestimmungsgemässen Betrieb in den zentralen Bereich (7) geführt wird.

34. Vorrichtung nach Anspruch 31 und nach Anspruch 32, wobei die Mittel (17, 18) zum Wegführen von Material (1) von dem Materialstrom (4) derartig ausgebildet oder einstellbar sind, dass das Material (1) des äusseren Randbereichs des ring- oder bogenförmigen Materialstromes (4) im bestimmungsgemässen Betrieb nicht in den zentralen Bereich (7) geführt wird, sondern als durchgehender ring- oder bogenförmiger Materialstrom (4a) fortwährend umläuft.

35. Vorrichtung nach einem der Ansprüche 20 bis 34, wobei die Hochspannungselektroden-Anordnung (2) eine matrixartige Anordnung aus mehreren Hochspannungselektroden (12) umfasst, welche jeweils mit Hochspannungspulsen beaufschlagbar sind.

36. Vorrichtung nach Anspruch 35, wobei jeder Hochspannungselektrode (12) der matrixartigen Hochspannungselektroden-Anordnung (2) ein eigener Hochspannungsgenerator (3) zugeordnet ist, mit welchem diese Hochspannungselektrode (12) unabhängig von den anderen Hochspannungselektroden (12) mit Hochspannungspulsen beaufschlagbar ist, und wobei die Hochspannungselektroden unabhängig voneinander entlang von insbesondere parallelen, insbesondere vertikal orientierten Verschiebeachsen verschiebbar sind.

37. Vorrichtung nach Anspruch 36, des Weiteren umfassend eine Maschinensteuerung, mittels welcher im bestimmungsgemässen Betrieb während dem Vorbeiführen des ring- oder bogenförmigen Materialstroms an der matrixartigen Anordnung aus Hochspannungselektroden und dem Erzeugen von Hochspannungsdurchschlägen durch das Material des Materialstromes die Hochspannungselektroden automatisch derartig entlang ihrer Verschiebeachsen verschoben werden können, dass sie jeweils der Kontur des Materialstromes mit einem bestimmten Abstand folgen oder jeweils in Kontakt mit der Oberfläche des Materialstromes der Kontur desselben folgen.

38. Vorrichtung nach einem der Ansprüche 20 bis 37, wobei als Gegenelektrode für die Hochspannungselektroden der Hochspannungselektroden-Anordnung der Bereich der karussellartigen Einrichtung dient, auf welchem diese das den ring- oder bogenförmigen Materialstrom bildende Material trägt.

39. Vorrichtung nach einem der Ansprüche 20 bis 38, wobei jeder Hochspannungselektrode (12) eine oder mehrere eigene Gegenelektroden (13) zugeordnet sind, welche seitlich neben und/oder unter der jeweiligen Hochspannungselektrode (12) angeordnet ist oder sind, und insbesondere von dieser getragen ist oder sind, derart, dass im bestimmungsgemässen Betrieb durch das Beaufschlagen der jeweiligen Hochspannungselektrode (12) mit Hochspannungspulsen Hochspannungsdurchschläge zwischen der Hochspannungselektrode (12) und der oder den Gegenelektroden (13) durch das Material (1) des Materialstromes (4) hindurch erzeugt werden können.

## Claims

1. Method for fragmenting and/or weakening pourable material (1) by means of high voltage discharges, comprising the steps:
a) providing a high voltage electrode arrangement (2) which is attributed to one or more high voltage generators (3), by means of which it is charged with high voltage pulses;
b) guiding an annular or arcuate, particularly circular or circular-segment-shaped material stream (4) of pourable material (1), immersed in a process liquid (5), past the high voltage electrode arrangement (2); and
c) generating high voltage punctures through the material stream (4) while guiding the latter past the high voltage electrode arrangement (2) by charging the high voltage electrode arrangement (2) with high voltage pulses,
wherein material (1) is supplied to the material stream (4) upstream of the high voltage electrode arrangement (2) and material (1) is guided away from the material stream (4) downstream of the high voltage electrode arrangement (2).

2. Method according to claim 1, wherein no material (1) is guided away in that area of the material stream (4), where high voltage punctures through the material stream (4) are generated by the high voltage electrode arrangement (2).

3. Method according to one of the preceding claims, wherein a partial stream (6) of the material stream (4) or the entire material stream (4) is guided downstream of the high voltage electrode arrangement (2) into a central section (7) which is surrounded by the annular or arcuate material stream (4).

4. Method according to claim 3, wherein at least a part of the material (1) guided into the central section (7) is guided out of this area.

5. Method according to one of the claims 3 to 4, wherein at least a part of the material (1) guided into the central section (7) is guided back from this section into the annular or arcuate material stream (4).

6. Method according to claim 4 and to claim 5, wherein the material (1) guided into the central section (7) is separated by means of a separation device (8), particularly by means of a sieve (8), in completely processed material (1a) and not completely processed material (1b) and the completely processed material (1a) is guided out of the central section (7), while the not completely processed material (1b) is guided back into the annular or arcuate material stream (4).

7. Method according to one of the preceding claims, wherein the material stream (4) is formed by supplying the material (1) onto a carousel-type device (9, 10, 11) and guiding it past the high voltage electrode arrangement (2) by rotating this device (9, 10, 11) around a substantially vertical axis (Z) running through the central section (7).

8. Method according to one of the preceding claims, wherein a high voltage electrode arrangement (2) is used, which comprises a matrix-type arrangement of a plurality of high voltage electrodes (12), each of which is charged with high voltage pulses.

9. Method according to one of the preceding claims, wherein an element is used as opposite electrode for the high voltage electrodes of the high voltage electrode arrangement, which limits the bottom side of the material stream in the area of the high voltage electrode arrangement, and particularly wherein this element is the floor of a carousel-type device by means of which the material stream is guided past the high voltage electrode arrangement.

10. Method according to one of the claims 1 to 8, wherein each high voltage electrode (12) is attributed to one or more own opposite electrodes (13), which is or are arranged laterally neighboring and/or below the respective high voltage electrode (12), in such a way that high voltage punctures are generated through the material (1) of the material stream (4) between the high voltage electrode (12) and the opposite electrode or electrodes (13) by charging the respective high voltage electrode (12) with high voltage pulses.

11. Method according to one of the preceding claims, wherein the material (1) of the outer and/or the inner edge section of the annular or arcuate material stream (4) is not guided away, but rotates continuously as continuous annular or arcuate material stream (4a, 4b).

12. Method according to one of the preceding claims, wherein material from the middle section of the material stream is guided away at a first position downstream of the high voltage electrode arrangement, the material of the outer and/or the inner edge section is guided at least partially into the middle section of the material stream at a second position downstream of the first position and new material is supplied in the outer and/or inner edge section of the material stream at a third position downstream of the second position, before the material stream is again guided past the high voltage electrode arrangement and is charged with high voltage punctures.

13. Method according to one of the preceding claims, wherein the inner and/or the outer edge section of the material stream (4) is limited or are limited, respectively, by substantially unmoved sections (14) of the same material (1) in the area where high voltage punctures through the material (1) of the material stream are generated.

14. Method according to claim 13, wherein the substantially unmoved sections (14) are generated in such a way that the inner and/or outer edge section of the material stream (4) is or are, respectively, retained downstream of the high voltage electrode arrangement (2).

15. Method according to claim 11 and according to one of the claims 13 to 14, wherein the material (1) of the outer edge section of the annular or arcuate material stream (4) is not guided away, but rotates continuously as continuous annular or arcuate material stream (4a), and wherein the inner edge section of the material stream (4) is limited by substantially unmoved sections (14) of the same material (1) in the area where high voltage punctures through the material (1) of the material stream (4) are generated.

16. Method according to claim 12 and according to one of the claims 13 to 14, wherein the material (1) of the outer edge section of the annular or arcuate material stream (4) is guided at the second position at least partially into the middle of the material stream (4) and new material (1) is supplied into the outer edge section of the material stream (4) at the third position, before the material stream (1) is again guided past the high voltage electrode arrangement (2) and is charged with high voltage punctures.

17. Method according to one of the claims 3 to 6 and according to one of the claims 15 to 16, wherein material (1) from the middle section of the material stream (4) is guided away downstream from the high voltage electrode arrangement (2) and into the central section (7).

18. Method according to one of the preceding claims, wherein the high voltage electrode arrangement has one or more high voltage electrodes which are shiftable independently from one another along particularly parallel, particularly vertically oriented shift axes, and wherein these high voltage electrodes, while guiding the material stream past the high voltage electrode arrangement and generating high voltage punctures through the material stream, are shifted in such a way along their shift axes that each of them follows the contour of the material stream with a certain distance or follow the contour of the material stream in contact with the surface of the material stream and are at the same time immersed into the process liquid.

19. Method according to claim 10 and according to claim 18, wherein the opposite electrode attributed to the respective high voltage electrode is shifted along the shift axis together with the respective high voltage electrode.

20. Device for carrying out the method according to one of the preceding claims, comprising:
a) a high voltage electrode arrangement (2) which is attributed to one or more high voltage generators (3), by means of which it can be charged with high voltage pulses;
b) a carousel-type device (9, 10, 11), by means of which pourable material is guided past the high voltage electrode arrangement (2) as annular or arcuate, particularly circular or circular-segment-shaped, material stream (4), immersed into a process fluid (5), particularly by rotating it around a central and substantially vertical axis (Z), in such a way that high voltage punctures through the material stream (4) can be generated while it is guided past the high voltage electrode arrangement (2) when the high voltage electrode arrangement (2) is charged with high voltage pulses;
c) Means (15, 16) for supplying material (1) upstream of the high voltage electrode arrangement (2) to the annular or arcuate material stream (4) generated by means of the carousel-type device during use as intended.
d) means (16, 17, 18) for guiding away material (1, 1a) downstream of the high voltage electrode arrangement (2) from the annular or arcuate material stream (4) generated by means of the carousel-type device during use as intended.

21. Device according to claim 20, wherein the carousel-type device has sieve openings in the area in which it carries the material forming the annular or arcuate material stream, in operation as intended, as means for guiding away material, via which sieve openings material which is smaller than the sieve openings can be guided away from the material stream.

22. Device according to claim 20, wherein the carousel-type device (9, 10, 11) forms a closed floor in the area in which it carries the material forming the annular or arcuate material stream, in operation as intended, and wherein the means (17) for guiding away material (1) are formed in such a way, particularly as one or multiple guiding installations (17), that with them a partial stream of the material stream (4) or the entire material stream (4) can be guided into a central section (7) in the center of the carousel-type device (9, 10, 11), which is surrounded by the annular or arcuate material stream (4).

23. Device according to claim 22, wherein means (19, 20) are present for guiding at least a part of the material (1) guided into the central section (7) out of the central section (7) and away from the carousel-type installation (9, 10, 11), and particularly wherein these means comprise a material slide or a funnel (19).

24. Device according to one of the claims 22 to 23, wherein means (21) are present for guiding back at least a part of the material (1) guided into the central section (7) into the annular or arcuate material stream (4), and particularly wherein these means (21) comprise one or more guiding installations (21).

25. Device according to claim 23 and to claim 24, wherein a separation installation (8) is arranged in the central section (7), particularly comprising a sieve (8), by means of which the material guided into this section (7) can be separated in completely processed material (1a) and not completely processed material (1b), wherein the completely processed material (1a) can be guided out of the central section (7) with the means (19, 20) for guiding away the material (1) and the not completely processed material (1b) can be supplied into the annular or arcuate material stream (4) with the means (21) for guiding back the material (1).

26. Device according to one of the claims 20 to 25, wherein the device has means (22), particularly one or more retaining installations (22), by means of which it is possible to effect during use as intended that the inner edge section and/or the outer edge section of the annular or arcuate material stream (4) is or are limited, respectively, substantially by unmoved sections (14) of the same material (1) in the area where high voltage punctures are generated through the material (1) of the material stream (4).

27. Device according to one of the claims 20 to 26, wherein the device is formed in such a way that the material (1) of the inner edge section and/or of the outer edge section of the annular or arcuate material stream (4) is not guided away from the material stream downstream of the high voltage electrode arrangement (2), in operation as intended, but circulates continuously as continuous annular or arcuate partial material stream (4a, 4b).

28. Device according to one of the claims 20 to 27, wherein the device is formed in such a way that, in operation as intended, material from the middle section of the material stream is guided away from the middle section of the material stream at a first position downstream of the high voltage electrode arrangement, the material of the outer and/or the inner edge section is guided at least partially into the middle of the material stream at a second position downstream of the first position, and new material is supplied into the outer and/or inner edge section of the material stream at a third position downstream of the second position, before the material stream is again guided past the high voltage electrode arrangement and is charged with high voltage punctures.

29. Device according to claim 26 and claim 27, wherein the device is formed in such a way that the material (1) of the outer edge section of the annular or arcuate material stream (4) is not guided away but circulates continuously as continuous annular or arcuate material stream (4a), and wherein the inner edge section of the material stream (4) is limited by substantially unmoved sections (14) made of the same material (1) in the section where high voltage punctures through the material (1) of the material stream (4) are generated.

30. Device according to claim 27 and claim 28, wherein the device is formed in such a way that the material of the outer edge section of the annular or arcuate material stream is guided at least partially into the middle of the material stream at the second position and new material is supplied into the outer edge section of the material stream at the third position, before the material stream is again guided past the high voltage electrode arrangement and is charged with high voltage punctures.

31. Device according to one of the claims 20 to 30, wherein the section of the carousel-type installation (9, 10, 11), in which the latter, in operation as intended, carries the material (1) forming the annular or arcuate material stream (4), is limited at its outer circumference by a limitation wall (9) closed with respect to circumference, and wherein the device is formed in such a way that this limitation wall (9) is moved together with the material (1) of the material stream (4) in operation as intended of the device.

32. Device according to one of the claims 20 to 31, wherein the section of the carousel-type installation (9, 10, 11), in which the latter, in operation as intended, carries the material (1) forming the annular or arcuate material stream (4), is limited at its inner circumference by a fixed limitation wall (11) which has an interruption (23) downstream of the high voltage electrode arrangement (2) and wherein the means (17, 18) for guiding away material (1) from the material stream (4) are formed in such a way that material (1) from the annular or arcuate material stream (4) is guided through this interruption (23), in operation as intended, into a central section (7) in the center of the carousel-type installation (9, 10, 11), which is surrounded by the annular or arcuate material stream (4).

33. Device according to claim 31 and claim 32, wherein the means (17) for guiding away material (1) from the material stream (4) are formed or are adjustable in such a way that the entire annular or arcuate material stream (4) is guided into the central section (7) in operation as intended.

34. Device according to claim 31 and to claim 32, wherein the means (17, 18) for guiding away material (1) from the material stream (4) are formed or are adjustable in such a way that material (1) of the outer edge section of the annular or arcuate material stream (4) is not guided into the central section (7) in operation as intended, but circulates continuously as continuous annular or arcuate material stream (4a).

35. Device according to one of the claims 20 to 34, wherein the high voltage electrode arrangement (2) comprises a matrix-type arrangement made of multiple high voltage electrodes (12), each of which are charged with high voltage pulses.

36. Device according to claim 35, wherein an own high voltage generator (3) is attributed to each high voltage electrode (12) of the matrix-type high voltage electrode arrangement (2), by means of which this high voltage electrode (12) can be charged with high voltage pulses independently from the other high voltage electrodes (12) and wherein the high voltage electrodes are shiftable along particularly parallel, particularly vertically oriented shifting axes independently from one another.

37. Device according to claim 36, further comprising a machine controller, by means of which, in operation as intended, during the guiding of the annular or arcuate material stream past the matrix-type arrangement of high voltage electrodes and the generation of high voltage punctures through the material of the material stream, the high voltage electrodes can be shifted along their shifting axes in such a way that each of them follows the contour of the material stream at a certain distance or each of them follows the contour of the material stream in contact with the latter.

38. Device according to one of the claims 20 to 37, wherein the section of the carousel-type installation serves as opposite electrode for the high voltage electrodes of the high voltage electrode arrangement, on which section the latter carries the material forming the annular or arcuate material stream.

39. Device according to one of the claims 20 to 38, wherein one or more own opposite electrodes (13) are attributed to each high voltage electrode (12), which is or are arranged laterally adjacent and/or below the respective high voltage electrode (12), and particularly is or are carried by the latter in such a way that high voltage punctures between the high voltage electrode (12) and the opposite electrode or electrodes (13) through the material (1) of the material stream (4) can be generated in operation as intended by charging the respective high voltage electrode (12) with high voltage pulses.

## Revendications

1. Procédé pour fragmenter et/ou affaiblir du matériau coulant (1) à l'aide des décharges à haute tension, comprenant les étapes:
a) de fournir un agencement d'électrodes à haute tension (2), qui est attribué à un ou plusieurs générateurs de haute tension (3), à l'aide duquel il est chargé avec des impulsions à haute tension;
b) de faire passer un courant de matériau (4) annulaire ou courbé, particulièrement circulaire ou en forme de segment circulaire, de matériau coulant (1), immergé dans un liquide de processus (5), par l'agencement d'électrodes à haute tension (2); et
c) de générer des perforations de haute tension à travers le courant de matériau (4) pendant le passage du même par l'agencement d'électrodes à haute tension (2) en chargeant l'agencement d'électrodes à haute tension (2) avec des impulsions à haute tension,
du matériau (1) étant fourni au courant de matériau (4) en amont de l'agencement d'électrodes à haute tension (2) et du matériau (1) étant éloigné du courant de matériau (4) en aval de l'agencement d'électrodes à haute tension (2).

2. Procédé selon la revendication 1, du matériau n'étant pas éloigné dans la région du courant de matériau (4), où des perforations de haute tension à travers le courant de matériau sont générées par l'agencement d'électrodes à haute tension (2).

3. Procédé selon l'une des revendications précédentes, un courant partiel (6) du courant de matériau (4) ou le courant de matériau entier (4) étant guidé en aval de l'agencement d'électrodes à haute tension (2) dans une section centrale (7) entourée par le courant de matériau (4) annulaire ou courbé.

4. Procédé selon la revendication 3, au moins une partie du matériau (1) guidé dans la section centrale (7) étant guidée hors de cette région.

5. Procédé selon l'une des revendications 3 à 4, au moins une partie du matériau (1) guidé dans la section centrale (7) étant renvoyée de cette section dans le courant de matériau (4) annulaire ou courbé.

6. Procédé selon la revendication 4 et la revendication 5, le matériau (1) guidé dans la section centrale (7) étant séparé par un dispositif de séparation (8), particulièrement à l'aide d'une passoire (8), en matériau (la) entièrement traité et matériau (1b) non entièrement traité et le matériau entièrement traité (la) étant guidé hors de la section centrale (7), alors que le matériau non entièrement traité (1b) est retourné dans le courant de matériau (4) annulaire ou courbé.

7. Procédé selon l'une des revendications précédentes, le courant de matériau (4) étant formé en alimentant le matériau (1) sur un dispositif en forme de carrousel (9, 10, 11) et en le faisant passer par l'agencement d'électrodes à haute tension (2) en tournant ce dispositif (9, 10, 11) autour d'un axe essentiellement verticale (Z) qui s'étend à travers la section centrale (7) .

8. Procédé selon l'une des revendications précédentes, un agencement d'électrodes à haute tension (2) étant utilisé, qui comprend un agencement en forme de matrice d'une pluralité d'électrodes à haute tension (12), dont chacune est chargée avec des impulsions de haute tension.

9. Procédé selon l'une des revendications précédentes, un élément étant utilisé comme électrode opposée pour les électrodes à haute tension de l'agencement d'électrodes à haute tension, qui limite la région inférieure du courant de matériau dans la zone de l'agencement d'électrodes à haute tension, et particulièrement cet élément étant le fond d'un dispositif en forme de carrousel à l'aide duquel le courant de matériau est passé par l'agencement d'électrodes à haute tension.

10. Procédé selon l'une des revendication 1 à 8, chaque électrode à haute tension (12) étant attribuée à une ou plusieurs propres électrodes opposées (13), qui est ou sont arrangée(s) latéralement dans le voisinage et/ou au-dessous de la respective électrode à haute tension (12), de sorte que des perforations de haute tension sont générées à travers le matériau (1) du courant de matériau (4) entre l'électrode à haute tension (12) et l'électrode opposée ou les électrodes opposées (13) en chargeant la respective électrode à haute tension (12) avec des impulsions à haute tension.

11. Procédé selon l'une des revendications précédentes, le matériau (1) de la section de bord extérieure et/ou intérieure du courant de matériau annulaire ou courbé (4) n'étant pas éloigné mais il tourne de manière continue comme courant de matériau annulaire ou courbé (4a, 4b) continu.

12. Procédé selon l'une des revendications précédentes, du matériau de la section centrale du courant de matériau étant éloigné à une première position en aval de l'agencement d'électrodes à haute tension, le matériau de la section de bord extérieure et/ou intérieure étant guidé au moins partiellement dans la section centrale du courant de matériau à une deuxième position en aval de la première position et du nouveau matériau étant alimenté dans la section de bord extérieure et/ou intérieure du courant de matériau à une troisième position en aval de la deuxième position, avant que le courant de matériau est de nouveau passé par l'agencement d'électrodes à haute tension et chargé avec des perforations de haute tension.

13. Procédé selon l'une des revendications précédentes, la section de bord intérieure et/ou extérieure du courant de matériau (4) étant limitée(s) par des sections essentiellement immobiles (14) du même matériau (1) dans la zone où des perforations de haute tension à travers le matériau (1) du courant de matériau sont générées.

14. Procédé selon la revendication 13, les sections essentiellement immobiles (14) étant générées de sorte que la section de bord intérieure et/ou extérieure du courant de matériau (4) est ou bien sont retenues en aval de l'agencement d'électrodes à haute tension (2).

15. Procédé selon la revendication 11 et selon l'une des revendications 13 à 14, le matériau (1) de la section de bord extérieure du courant de matériau (4) annulaire ou courbé n'étant pas éloigné mais il tourne de manière continue comme courant de matériau annulaire ou courbé continu (4a), et la section de bord intérieure du courant de matériau (4) étant limitée par des sections essentiellement immobiles (14) du même matériau (1) dans la zone où des perforations de haute tension à travers le matériau (1) du courant de matériau (4) sont générées.

16. Procédé selon la revendication 12 et selon l'une des revendications 13 ou 14, le matériau (1) de la section de bord extérieure du courant de matériau (4) annulaire ou courbé étant guidé dans la deuxième position au moins partiellement au centre du courant de matériau (4) et de nouveau matériau (1) étant alimenté dans la section de bord extérieure du courant de matériau (4) dans la troisième position, avant que le courant de matériau (1) est de nouveau passé par l'agencement d'électrodes à haute tension (2) et est chargé avec des perforations de haute tension.

17. Procédé selon l'une des revendications 3 à 6 et selon l'une des revendications 15 à 16, du matériau (1) de la section centrale du courant de matériau (4) étant éloigné en aval de l'agencement d'électrodes à haute tension (2) et dans la section centrale (7).

18. Procédé selon l'une des revendications précédentes, l'agencement d'électrodes à haute tension ayant un ou plusieurs électrodes à haute tension qui sont déplaçables indépendamment l'un de l'autre le long des axes de déplacement particulièrement parallèles, particulièrement orientés verticalement, et ces électrodes à haute tension étant déplacés le long de leur axe de déplacement, pendant le passage du courant de matériau par l'agencement d'électrodes à haute tension et la génération des perforations de haute tension à travers le courant de matériau, de sorte que chacune suit le contour du courant de matériau à une certaine distance ou suit le contour du courant de matériau en contact avec la surface du courant de matériau, étant au même temps immergées dans le liquide de processus.

19. Procédé selon la revendication 10 et selon la revendication 18, l'électrode opposée, attribuée à la respective électrode à haute tension, étant déplacée le long de l'axe de déplacement ensemble avec la respective électrode à haute tension.

20. Dispositif pour la mise en oeuvre du procédé selon l'une des revendications précédentes, comprenant:
a) un agencement d'électrodes à haute tension (2) qui est attribué à un ou plusieurs générateurs de haute tension (3), à l'aide desquels il peut être chargé avec des impulsions à haute tension;
b) un dispositif en forme de carrousel (9, 10, 11), à l'aide duquel du matériau coulant est passé par l'agencement d'électrodes à haute tension (2) comme courant de matériau (4) annulaire ou courbé, particulièrement circulaire ou en forme de segment circulaire, immergé dans un liquide de processus (5), particulièrement en le tournant autour d'un axe (Z) central et essentiellement vertical, de sorte que des perforations de haute tension à travers le courant de matériau (4) peuvent être générées pendant son passage par l'agencement d'électrodes à haute tension (2) quand l'agencement d'électrodes à haute tension (2) est chargé avec des impulsions à haute tension;
c) des moyens (15, 16) pour fournir du matériau (1) en amont de l'agencement d'électrodes à haute tension (2) au courant de matériau (4) annulaire ou courbé généré par le dispositif en forme de carrousel pendant l'utilisation comme prévu;
d) des moyens (16, 17, 18) pour éloigner du matériau (1, la), en aval de l'agencement d'électrodes à haute tension (2), du courant de matériau (4) annulaire ou courbé généré par le dispositif en forme de carrousel pendant l'utilisation comme prévu.

21. Dispositif selon la revendication 20, le dispositif en forme de carrousel ayant des ouvertures de passoire dans la zone où il porte le matériau qui forme le courant de matériau annulaire ou courbé, en opération comme prévu, comme moyen pour éloigner du matériau, par lesquelles ouvertures de passoire du matériau plus petit que les ouvertures de passoire peut être éloigné du courant de matériau.

22. Dispositif selon la revendication 20, le dispositif en forme de carrousel (9, 10, 11) formant un étage fermé dans la zone où il porte le matériau qui forme le courant de matériau annulaire ou courbé, en opération comme prévu, et les moyens (17) pour éloigner du matériau (1) étant formés, particulièrement comme une ou plusieurs installations de guidage (17), de sorte qu'avec eux un courant partiel du courant de matériau (4) ou le courant de matériau entier (4) peut être guidé dans une section centrale (7) au centre du dispositif en forme de carrousel (9, 10, 11), qui est entouré par le courant de matériau (4) annulaire ou courbé.

23. Dispositif selon la revendication 22, des moyens (19, 20) étant présents pour guider au moins une partie du matériau (1) guidé dans la section centrale (7) hors de la section centrale (7) et l'éloigner de l'installation en forme de carrousel (9, 10, 11), et particulièrement ces moyens comprenant une glissière de matériau ou un entonnoir (19).

24. Dispositif selon l'une des revendications 22 à 23, des moyens (21) étant présents pour retourner au moins une partie du matériau (1) guidé dans la section centrale (7) dans le courant de matériau (4) annulaire ou courbé, et particulièrement ces moyens (21) comprenant un ou plusieurs installations de guidage (21).

25. Dispositif selon la revendication 23 et la revendication 24, une installation de séparation (8) étant arrangée dans la section centrale (7), particulièrement comprenant une passoire (8), à l'aide de laquelle le matériau guidé dans cette section (7) peut être séparé en matériau entièrement traité (la) et non entièrement traité (1b) le matériau entièrement traité (la) pouvant être guidé hors de la section centrale (7) avec les moyens (19, 20) pour éloigner le matériau (1) et le matériau non entièrement traité (1b) pouvant être alimenté dans le courant de matériau (4) annulaire ou courbé avec les moyens (21) pour retourner le matériau (1) .

26. Dispositif selon l'une des revendications 20 à 25, le dispositif ayant des moyens (22) particulièrement une ou plusieurs installations de retenue (2), à l'aide de laquelle ou desquelles il est possible de réaliser pendant l'utilisation comme prévu que la section de bord intérieure et/ou la section de bord extérieure du courant de matériau (4) annulaire ou courbé est ou bien sont limitée(s), essentiellement par des sections immobiles (14) du même matériau (1) dans la zone où des perforations de haute tension sont générées à travers le matériau (1) du courant de matériau (4).

27. Dispositif selon l'une des revendications 20 à 26, le dispositif étant formé de sorte que le matériau (1) de la section de bord intérieure et/ou de la section de bord extérieure du courant de matériau (4) annulaire ou courbé n'est pas éloigné du courant de matériau en aval de l'agencement d'électrodes à haute tension (2), en opération comme prévu, mais il circule de manière continue comme courant de matériau (4a, 4b) annulaire ou courbé partiel continu.

28. Dispositif selon l'une des revendications 20 à 27, le dispositif étant formé de sorte que, en opération comme prévu, du matériau de la section centrale du courant de matériau est éloigné de la section centrale du courant de matériau à une première position en aval de l'agencement d'électrodes à haute tension, le matériau de la section de bord intérieure et/ou de la section de bord extérieure étant guidé au moins partiellement au centre du courant de matériau à une deuxième position en aval de la première position, et du nouveau matériau étant alimenté dans la section de bord intérieure et/ou de la section de bord extérieure du courant de matériau à une position en aval de la deuxième position, avant que le courant de matériau est de nouveau passé par l'agencement d'électrodes à haute tension et est chargé avec des perforations de haute tension.

29. Dispositif selon la revendication 26 et 27, le dispositif étant formé de sorte que le matériau (1) de la section de bord intérieure et/ou de la section de bord extérieure du courant de matériau (4) n'est pas éloigné mais il circule de manière continue comme courant de matériau annulaire ou courbé continu (4a), et la section de bord intérieure du courant de matériau (4) est limitée par des sections essentiellement immobiles (14) du même matériau (1) dans la section où des perforations de haute tension à travers le matériau (1) du courant de matériau (4) sont générées.

30. Dispositif selon la revendication 27 et la revendication 28, le dispositif étant formé de sorte que le matériau de la section de bord intérieure du courant de matériau annulaire ou courbé est guidé au moins partiellement au centre du courant de matériau à la deuxième position et du nouveau matériau est alimenté dans la section de bord extérieure du courant de matériau à la troisième position, avant que le courant de matériau est de nouveau passé par l'agencement d'électrodes à haute tension (2) et est chargé avec des perforations de haute tension.

31. Dispositif selon l'une des revendications 20 à 30, la section de l'installation en forme de carrousel (9, 10, 11), dans laquelle la même porte le matériau (1) qui forme le courant de matériau (4) annulaire ou courbé, en opération comme prévu, étant limitée à sa circonférence extérieure par une paroi de limitation (9) fermée par rapport à la circonférence, et le dispositif étant formé de sorte que cette paroi de limitation (9) est déplacée ensemble avec le matériau (1) du courant de matériau (4) en opération comme prévu du dispositif.

32. Dispositif selon l'une des revendications 20 à 31, la section de l'installation en forme de carrousel (9, 10, 11), dans laquelle la même porte le matériau (1) qui forme le courant de matériau (4) annulaire ou courbé, en opération comme prévu, étant limitée à sa circonférence intérieure par une paroi de limitation fixe (11) qui a une interruption (23) en aval de l'agencement d'électrodes à haute tension (2) et les moyens (17, 18) pour éloigner du matériau (1) du courant de matériau (4) étant formés de sorte que du matériau (1) du courant de matériau annulaire ou courbé (4) est guidé à travers cette interruption (23), en opération comme prévu, dans une section centrale (7) au centre de l'installation en forme de carrousel (9, 10, 11), qui est entourée par le courant de matériau annulaire ou courbé (4) .

33. Dispositif selon la revendication 31 et la revendication 32, les moyens (17, 18) pour éloigner du matériau (1) du courant de matériau (4) étant formés ou étant ajustables de sorte que le courant de matériau annulaire ou courbé (4) entier est guidé dans la section centrale (7) en opération comme prévu.

34. Dispositif selon la revendication 31 et la revendication 32, les moyens (17) pour éloigner du matériau (1) du courant de matériau (4) étant formés ou étant ajustables de sorte que du matériau (1) de la section extérieure du courant de matériau (4) annulaire ou courbé n'est pas guidé dans la section centrale (7) en opération comme prévu, mais il circule continument comme courant de matériau (4a) annulaire ou courbé continu.

35. Dispositif selon l'une des revendications 20 à 34, l'agencement d'électrodes à haute tension (2) comprenant un agencement en forme de matrice avec des multiples électrodes à haute tension (12), dont chacune est chargée avec des impulsions à haute tension.

36. Dispositif selon la revendication 35, un propre générateur de haute tension (3) étant attribué à chaque électrode à haute tension (12) de l'agencement d'électrodes à haute tension en forme de matrice (2), à l'aide duquel cette électrode à haute tension (12) peut être chargée avec des impulsions à haute tension indépendamment des autres électrodes à haute tension (12) et les électrodes à haute tension étant déplaçables le long des axes de déplacement particulièrement parallèles, particulièrement orientés de manière verticale indépendamment l'une de l'autre.

37. Dispositif selon la revendication 36, comprenant en outre une commande de machine à l'aide de laquelle, en opération comma prévu, les électrodes à haute tension peuvent être déplacées le long de leur axe de déplacement, pendant le passage du courant de matériau annulaire ou courbé par l'agencement en forme de matrice des électrodes à haute tension et la génération des perforations de haute tension à travers le matériau du courant de matériau, de sorte que chacune suit un contour du courant de matériau à une certaine distance ou chacune suit le contour du courant de matériau en contact avec la dernière.

38. Dispositif selon l'une des revendications 20 à 37, la section de l'installation en forme de carrousel serve comme électrode opposée pour les électrode à haute tension de l'agencement d'électrodes à haute tension, sur laquelle section la dernière porte le matériau qui forme le courant de matériau annulaire ou courbé.

39. Dispositif selon l'une des revendications 20 à 38, une ou plusieurs électrodes opposées (13) étant attribuées à chaque électrode à haute tension (12), qui est ou qui sont arrangées latéralement dans le voisinage et/ou au-dessous de la respective électrode à haute tension (12), et particulièrement et ou sont portées par la dernière de sorte que des perforations de haute tension entre les électrodes à haute tension (12) et l'électrode ou les électrodes (13) opposées à travers le matériau (1) du courant de matériau (4) peuvent être générées en opération comme prévu en chargeant la respective électrode à haute tension (12) avec des impulsions à haute tension.
